(19) Europäisches Patentamt
European Patent Office
Office européen des brevets

(11) **EP 2 727 236 B1**

(12) **EUROPÄISCHE PATENTSCHRIFT**

(45) Veröffentlichungstag und Bekanntmachung des Hinweises auf die Patenterteilung:
**18.12.2019 Patentblatt 2019/51**

(21) Anmeldenummer: **12727347.2**

(22) Anmeldetag: **04.06.2012**

(51) Int Cl.:
*H02M 7/5387* (2007.01)    *H02M 7/5395* (2006.01)
*H03K 7/08* (2006.01)

(86) Internationale Anmeldenummer:
**PCT/EP2012/060470**

(87) Internationale Veröffentlichungsnummer:
**WO 2013/000667 (03.01.2013 Gazette 2013/01)**

(54) **VERFAHREN ZUM ANSTEUERN EINES WECHSELRICHTERS EINES ELEKTROWERKZEUGES UND ELEKTROWERKZEUG**

METHOD FOR ACTUATING AN INVERTER OF AN ELECTRIC TOOL AND ELECTRIC TOOL

PROCÉDÉ DE COMMANDE D'UN ONDULEUR D'UN OUTIL ÉLECTRIQUE ET OUTIL ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.06.2011 DE 102011078452**

(43) Veröffentlichungstag der Anmeldung:
**07.05.2014 Patentblatt 2014/19**

(73) Patentinhaber: **Robert Bosch GmbH**
**70442 Stuttgart (DE)**

(72) Erfinder:
• **KUEHNER, Jochen**
**71522 Backnang (DE)**
• **ROSER, Jochen**
**71229 Leonberg-Gebersheim (DE)**
• **STELLMANN, Georg**
**71640 Ludwigsburg (DE)**
• **PLATZER, Joachim**
**71686 Remseck-Hochberg (DE)**
• **KUHNEN, Klaus**
**66128 Saarbruecken (DE)**

(56) Entgegenhaltungen:
EP-A1- 1 707 144    WO-A2-2008/008777
US-A- 4 339 791    US-A- 4 691 269
US-A- 5 408 404

EP 2 727 236 B1

**Beschreibung**

Die Erfindung betrifft ein Verfahren zum Ansteuern eines Wechselrichters eines Elektrowerkzeuges zur Abgabe eines Stroms und einer Spannung an ein Ultraschallgerät des Elektrowerkzeuges gemäß Patentanspruch 1. Weiterhin betrifft die Erfindung ein Elektrowerkzeug mit einem Wechselrichter zur Erzeugung einer Versorgungsspannung für ein Ultraschallgeräts des Elektrowerkzeuges gemäß Patentanspruch 11.

Aus EP 1707144 A1 ist ein Verfahren und eine Vorrichtung zur Ansteuerung eines chirurgischen Ultraschallgerätes bekannt, bei dem mithilfe eines Görtzelalgorithmus eine Phaseninformation zwischen einem Strom und einer Spannung des Ultraschallgerätes ermittelt wird.

US 4 339 791 A offenbart ein Verfahren zum Ansteuern eines Wechselrichters eines Elektrowerkzeugs zur Abgabe einer Ultraschallspannung.

Die Aufgabe der Erfindung besteht darin, ein verbessertes Verfahren zum Ansteuern eines Wechselrichters eines Elektrowerkzeuges und ein verbessertes Elektrowerkzeug bereit zu stellen.

Weitere vorteilhafte Ausführungsformen des Verfahrens und der Leistungselektronik sind in den abhängigen Ansprüchen beschrieben.

Ein Vorteil des beschriebenen Verfahrens besteht darin, dass mithilfe eines einfachen Ansteuerverfahren der Wechselrichter eine Versorgungsspannung abgibt, die geringere Oberwellenanteile aufweist. Vorzugsweise werden die ersten Oberwellen wenigstens gedämpft oder vorzugsweise ausgelöscht. Das verbesserte Verfahren weist den Vorteil auf, dass Filter, die zum Unterdrücken der Oberschwingungen verwendet werden, kleiner dimensioniert werden können oder vollständig entfallen können. Somit wird ein verbessertes Verfahren zum Versorgen von Ultraschallgeräten, insbesondere Ultraschallwerkzeugen, bereitgestellt.

Die beschriebene Leistungselektronik weist den Vorteil auf, dass mithilfe des Wechselrichters ein Ultraschallgerät mit einer Wechselspannung versorgt wird, deren Oberwellen gedämpft sind. Somit kann ein Filter, das zur Dämpfung der Oberwellen verwendet wird, einfacher ausgebildet werden oder vollständig darauf verzichtet werden.

Der Vorteil des erfindungsgemäßen Verfahrens wird dadurch erreicht, dass der Wechselrichter in der Weise angesteuert wird, dass wenigstens zwei Spannungspulse während einer halben Periode der abzugebenden Versorgungsspannung vom Wechselrichter abgegeben werden. Auf diese Weise wird eine verbesserte Ansteuerung des Wechselrichters erreicht.

Der Vorteil der Leistungselektronik besteht darin, dass ein digitaler Pulssignalgenerator verwendet wird, wobei der Pulssignalgenerator ausgebildet ist, um ein Steuersignal zur Ansteuerung des Wechselrichters in der Weise bereitzustellen, dass der Wechselrichter während einer halben Periode der abzugebenden Versorgungsspannung wenigstens zwei Spannungspulse ausgibt.

In einer weiteren Ausführungsform ist das Steuersignal so gewählt, dass der Wechselrichter eine ungerade Anzahl von Spannungspulsen pro Halbperiode der abzugebenden Versorgungsspannung ausgibt, wobei die Anzahl größer als 1 ist. Versuche haben gezeigt, dass die Verwendung von beispielsweise drei oder fünf Spannungspulsen pro Halbperiode eine effiziente Reduzierung der Oberwellen in der abzugebenden Versorgungsspannung ermöglicht.

In einer weiteren Ausführungsform ist die Anzahl der Spannungspulse abhängig von weiteren Parametern, wie beispielsweise der elektrischen Leistung, die vom Wechselrichter dem Ultraschallgerät zur Verfügung gestellt wird. Versuche haben gezeigt, dass die Oberwellen der vom Wechselrichter abgegebenen Versorgungsspannung reduziert werden, wenn die Anzahl der Spannungspulse pro Halbperiode der abzugebenden Versorgungsspannung mit der vom Wechselrichter abzugebenden Leistung abnimmt. In einer einfachen Ausführungsform kann für eine Leistung, die unter einem vorgegebenen Schwellwert liegt, der Wechselrichter beispielsweise fünf Spannungspulse während der Halbperiode der abzugebenden Versorgungsspannung ausgeben. Übersteigt die vom Wechselrichter abzugebende Leistung den Schwellwert, so wird die Anzahl der Spannungspulse pro Halbperiode beispielsweise auf den Wert 3 reduziert. Abhängig von der gewählten Ausführungsform können auch andere Werte für die Spannungspulse oder mehrere Schwellwerte für die Leistung für mehrere Werte von Spannungspulsen verwendet werden.

In einer weiteren Ausführungsform wird als Istgröße ein analoger Messwert erfasst, wobei der analoge Messwert einer digitalen Messwertkorrektur unterzogen wird. Aufgrund der korrigierten digitalen Messwerte werden die Spannungspulse, d.h. die Anzahl, die zeitliche Dauer und die zeitliche Position innerhalb der Halbperiode ermittelt. Mithilfe der digitalen Messwertkorrektur können Ungenauigkeiten, die beispielsweise durch Filter erzeugt werden, unterdrückt werden. Somit ist eine verbesserte Ermittlung der Steuerpulse möglich.

In einer weiteren Ausführungsform wird aus dem korrigierten digitalen Messwert ein Istwert für den Strom und eine Phasenverschiebung zwischen dem Strom und der Spannung ermittelt und bei der Ermittlung der zeitlichen Position und der zeitlichen Länge der Spannungspulse berücksichtigt.

In einer weiteren Ausführungsform wird aus dem digitalen Istwert für den Strom und die Phase im Vergleich zu digitalen Sollwerten für den Strom und die Phase wenigstens ein digitaler Korrekturwert ermittelt. Der digitale Korrekturwert wird für die Ermittlung des Steuersignals verwendet. Somit wird ein genaues Regelungsverfahren abhängig von den gewünschten Sollwerten für den Strom und die Phase zwischen dem Strom und der Spannung bereitgestellt.

In einer weiteren Ausführungsform wird als Korrekturwert ein Modulationsgrad für den digitalen Pulssignalgenerator ermittelt, wobei der Modulationsgrad dem Pulssignalgenerator zugeführt wird und der Pulssignalgenerator in Abhängigkeit von dem zugeführten Modulationsgrad das Steuersignal ermittelt. Auf diese Weise wird ein einfaches und sicheres Regelverfahren zur Steuerung des Wechselrichters bereitgestellt.

In einer weiteren Ausführungsform wird bei einer digitalen Messwertkorrektur und/oder bei einer digitalen Signalverarbeitung und/oder bei einer Generierung des Steuersignals eine Stabilisierung des Phasenwinkels zwischen Strom und Spannung in Richtung auf einen Phasennulldurchgang durchgeführt. Dabei werden Taktfrequenzen, die bei der digitalen Messwertkorrektur und/oder bei der digitalen Signalverarbeitung und/oder bei der Generierung des Steuersignals verwendet werden, in der Weise verschoben, dass der Phasenwinkel zwischen Strom und Spannung der abgegebenen Wechselspannung am Ultraschallgerät in Richtung Phasennulldurchgang verschoben wird. Somit wird der für die Anregung des Ultraschallgerätes bevorzugte Phasennulldurchgang des Phasenwinkels zwischen Strom und Spannung eingestellt. Damit wird eine verbesserte Anregung des Ultraschallgerätes ermöglicht.

In einer weiteren Ausführungsform sind die Spannungspulse während einer Halbperiode unterschiedlich lang und symmetrisch in Bezug auf die Halbperiode angeordnet. Beispielsweise sind die Spannungspulse mittensymmetrisch zur Halbperiode angeordnet, wobei beispielsweise in der Mitte der Halbperiode ein längerer Spannungspuls angeordnet ist und seitlich versetzt, d.h. jeweils zum Anfang und zum Ende einer Halbperiode ein kürzerer erster bzw. dritter Spannungspuls vorgesehen sind. Auf diese Weise wird eine verbesserte Ansteuerung des Wechselrichters ermöglicht.

In einer weiteren Ausführungsform der Leistungselektronik ist eine analoge Messschaltung vorgesehen, wobei die analoge Messschaltung ausgebildet ist, um einen Messwert, insbesondere eine Spannung und/oder einen Strom der Versorgungsspannung des Wechselrichters zu erfassen und an eine digitale Regelung weiterzugeben. Die digitale Regelung ermittelt abhängig von einem Sollwert und dem Messwert einen Steuerwert und gibt den Steuerwert an den Pulssignalgenerator weiter. Der Pulssignalgenerator berücksichtigt den Steuerwert bei der Bildung des Steuersignals. Auf diese Weise wird eine genaue und einfache Regelung des Wechselrichters in Bezug auf den Messwert, d.h. die vom Wechselrichter abgegebene Spannung und/oder den abgegebenen Strom ermöglicht.

In einer weiteren Ausführungsform ist eine digitale Korrekturschaltung vorgesehen, wobei die Korrekturschaltung mit der analogen Messschaltung verbunden ist. Die digitale Korrekturschaltung ist ausgebildet, um analoge Messwerte zu digitalisieren und zu korrigieren. Beispielsweise wird ein Offset der Messspannung und/oder eine unerwünschte Messwertverstärkung und/oder ein frequenzabhängiger Verstärkungsfaktor eines Tiefpassfilters korrigiert. Mithilfe der digitalen Korrekturschaltung kann der erfasste Messwert auf einfache Weise korrigiert werden. Damit wird ein verbesserter korrigierter Messwert bereitgestellt.

In einer weiteren Ausführungsform ist eine digitale Verarbeitungsschaltung vorgesehen, die aus Messwerten der Ausgangsspannung des Wechselrichters einen Phasenwinkel zwischen dem Strom und der Spannung am Ultraschallgerät ermittelt. Weiterhin ist eine digitale Regelung vorgesehen, wobei die digitale Verarbeitungsschaltung einen Messwert, insbesondere den gemessenen Stromwert und den Phasenwinkel zwischen Strom und Spannung an die digitale Regelung weiterleitet. Die digitale Regelung ermittelt aus einem Vergleich zwischen einem Sollwert für den Phasenwinkel eine Stellgröße für eine Taktfrequenz und gibt diese als Stellgröße für die Taktfrequenz an den Pulssignalgenerator weiter. Zudem ermittelt die digitale Regelung aus einem Sollwert für den Strom und dem gemessenen Wert für den Strom einen Modulationsgrad. Die digitale Regelung gibt den Modulationsgrad an den Pulssignalgenerator weiter. Mithilfe der Stellgröße für die Taktfrequenz kann die Taktfrequenz des Pulssignalgenerators in der Weise angepasst werden, dass der Phasenwinkel zwischen Strom und Spannung am Ultraschallgerät in Richtung 0, d.h. in Richtung auf einen Phasennulldurchgang verschoben wird. Zudem kann der Pulssignalgenerator abhängig von dem zugeführten Modulationsgrad das Steuersignal festlegen, d.h. insbesondere die Zeitdauer und/oder die zeitliche Lage der Spannungspulse innerhalb der Halbperiode der Wechselspannung.

In einer weiteren Ausführungsform weist die digitale Korrekturschaltung einen A/D-Wandler auf. Der A/D-Wandler ist mit einer veränderlichen Taktfrequenz betreibbar. Wobei die Stellgröße für die Taktfrequenz an den A/D-Wandler geleitet wird und die Taktfrequenz des A/D-Wandlers abhängig von der Stellgröße angepasst wird. Somit wird eine verbesserte Erfassung und Umwandlung der analogen Messwerte in die digitalen Messwerte ermöglicht.

In einer weiteren Ausführungsform kann die digitale Signalverarbeitung mit unterschiedlichen Taktfrequenzen betrieben werden. Die digitale Regelung führt die Stellgröße für die Taktfrequenz der Signalverarbeitung zu und die Taktfrequenz der Signalverarbeitung wird abhängig von der Stellgröße der Taktfrequenz angepasst. Auf diese Weise wird eine verbesserte digitale Signalverarbeitung ermöglicht.

In einer weiteren Ausführungsform ist der Pulssignalgenerator ausgebildet, um abhängig von einem Sollstrom die Anzahl der während einer Halbperiode der Wechselspannung abzugebenden Spannungspulse verändert wird. Vorzugsweise nimmt die Anzahl der Spannungspulse mit steigendem Ausgangsstrom des Wechselrichters ab. Beispielsweise können drei Spannungspulse während einer Halbperiode der Wechselspannung für eine Stromstärke verwendet werden, die über einem Vergleichswert liegt. Sinkt die Stromstärke unter den Vergleichswert, so werden vom Wechselrichter während einer Halbperiode der Wechselspannung mehr Spannungspulse, beispielsweise fünf Spannungspulse abgegeben.

Die Erfindung wird im Folgenden anhand der Figuren näher erläutert. Es zeigen

Fig. 1 einen schematischen Aufbau einer Anordnung zur Versorgung eines Ultraschallgerätes mit einer Versorgungsspannung,
Fig. 2 die Ausbildung des Wechselrichters in Form einer Vollbrücke,
Fig. 3 die Ausbildung des Wechselrichters in Form einer Halbbrücke,
Fig. 4 ein Diagramm mit Steuerpulsen für eine Vollbrücke,
Fig. 5 ein Diagramm mit Steuerpulsen für eine Halbbrücke, und
Fig. 6 ein Diagramm mit symmetrischen Steuerpulsen,
Fig. 7 zeigt einen optimalen Puls,
Fig. 8 zeigt einen Verlauf von Flanken,
Fig. 9 zeigt eine Ausgangsspannung der Halbbrücke, und
Fig. 10 zeigt einen weiteren Verlauf von Flanken.

Die Erfindung wird im Folgenden am Beispiel eines Elektrowerkzeuges beschrieben, kann jedoch auf jede Art von Gerät, insbesondere Ultraschallgerät angewendet werden.

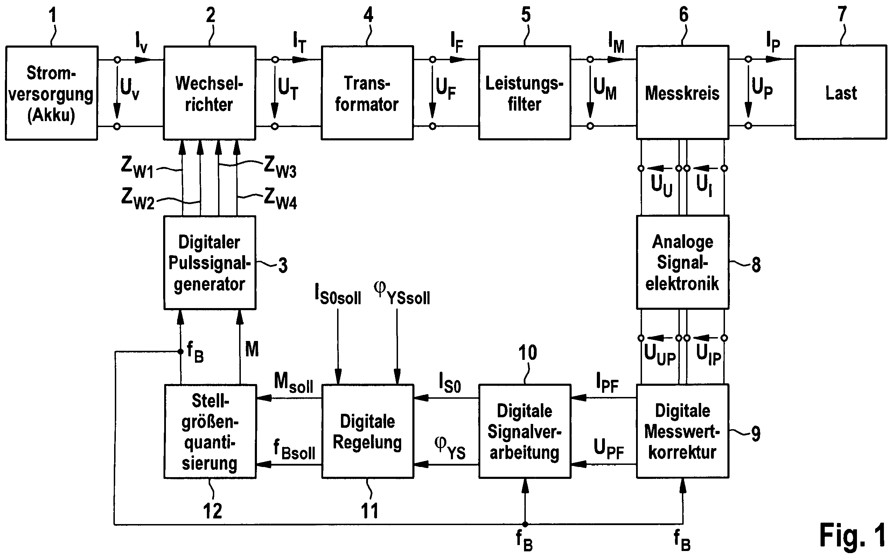

Fig. 1 zeigt in einer schematischen Anordnung eine Leistungselektronik in Form eines Resonanzstromrichters für ein Ultraschallgerät, beispielsweise für ein piezoelektrisch betriebenes Ultraschallschwingsystem. Eine Aufgabe des Resonanzstromrichters besteht darin, eine resonatorische Last stabil und robust, d.h. unabhängig von sich ändernden Umgebungs- und Lastbedingungen möglichst verlustarm in ihrem Resonanzpunkt mit einer vorgegebenen Schwingungsamplitude zu betreiben. Dazu kann ein Resonanzstromrichter gemäß der schematischen Darstellung von Fig. 1 verwendet werden. Abhängig von der gewählten Ausführungsform können jedoch auch andere Arten von Resonanzstromrichter verwendet werden.

Fig. 1 zeigt eine Stromversorgung 1, die eine konstante Spannung $U_V$ und einen konstanten Strom $I_V$ an einen Wechselrichter 2 liefert. Der Wechselrichter 2 formt abhängig vom Steuersignal, das von einem Pulssignalgenerator 3 zugeführt wird, an seinem Ausgang eine Versorgungsspannung mithilfe einer pulsförmigen Spannung $U_T$ in Form von Spannungspulsen, d.h. in Form eines pulsweitenmodulierten Spannungssignals, deren Spannungs-Zeit-Fläche proportional zu einer Amplitude einer Grundwelle der Versorgungsspannung im Spannungs-Zeit-Signal ist. Der Wechselrichter liefert seine Ausgangsspannung $U_T$ mit der Stromstärke $I_T$ an einen Transformator 4. Die Ausgangsspannung $U_T$ stellt eine Versorgungsspannung für eine Last 7 dar.

Ein Vorteil der schaltenden Ansteuerung des Wechselrichters gegenüber einem Linearverstärker besteht darin, dass im Schaltbetrieb Transistoren des Wechselrichters Schaltverluste nur in den Schaltzeitpunkten aufweisen und Durchgangsverluste durch den digitalen Betrieb minimiert werden. Ein Nachteil des Wechselrichters liegt in der Erzeugung von Oberwellen in der Ausgangsspannung $U_T$ und dem Ausgangsstrom $I_T$ am Eingang des nachfolgenden Transformators 4.

Der Transformator 4 transformiert die niedrige Eingangsspannung $U_T$ in eine hohe Ausgangsspannung $U_F$ und dem Übersetzungsverhältnis entsprechend einen hohen Eingangsstrom $I_T$ in einen niedrigen Ausgangsstrom $I_F$ für ein nachfolgendes Leistungsfilter 5. Das Leistungsfilter 5 hat die Aufgabe, die in der Spannung $U_F$ und dem Strom $I_F$ befindlichen Oberwellen zu dämpfen und damit für die Last 7, d.h. das Ultraschallgerät, eine möglichst oberwellenarme Ansteuerspannung $U_P$ und einen möglichst oberwellenarmen Ansteuerstrom $I_P$ bereitzustellen. Ein Messkreis 6 ist zwischen dem Leistungsfilter 5 und der Last 7 angeordnet. Der Messkreis 6 dient zur verlustarmen simultanen Messung einer Lastspannung $U_P$ und eines Laststromes $I_P$. Messspannungen $U_U$ für die Spannung und $U_I$ für den Strom werden durch eine analoge Signalelektronik 8 verlustfrei verarbeitet und ausgangsseitig in weitere Messspannungen $U_{UP}$ und $U_{IP}$ umgeformt. Die verwendete Signalelektronik arbeitet nur mit einer positiven Versorgungsspannung. Deshalb findet für die Messspannung als erstes eine Pegelumsetzung statt. Anschließend folgt eine Messwertverstärkung mit anschließender Tiefpassfilterung.

Die analoge Signalelektronik 8 ist mit Ausgängen an eine digitale Messwertkorrektur 9 angeschlossen und überliefert die gefilterten Messspannungen $U_{UP}$ und $U_{IP}$ an zwei A/D-Wandler, die die gefilterten Messspannungen in digitale Messdaten umwandeln. Die digitale Messwertkorrektur stellt eine erste Komponente der digitalen Steuerung dar. Abhängig von der gewählten Ausführungsform kann auch auf die digitale Messwertkorrektur verzichtet werden. In der digitalen Messwertkorrektur 9 wird durch einen Hochpass ein Offset aus den Messspannungen entfernt und eine Messwertverstärkung sowie ein frequenzabhängiger Verstärkungsfaktor der Tiefpassfilterung korrigiert. Am Ausgang der Messwertkorrektur stehen dann gefilterte und korrigierte digitale Messwerte $U_{PF}$ und $I_{PF}$ der Lastspannung $U_P$ und des Laststromes $I_P$ zur Verfügung. In einer folgenden digitalen Signalverarbeitung 10 wird aus den korrigierten Messwerten $U_{PF}$ und $I_{PF}$ eine Differenzphase zwischen der Grundwelle der Lastspannung $U_P$ und der Grundwelle des aus dem Laststrom $I_P$ abgeleiteten Bewegungsstroms $I_S$ der Last 7 herausgefiltert. Daraus wird die für die Phasenregelung relevante Winkelphase $\Phi_{YS}$ der Bewegungsadmittanz der Last 7 ermittelt. Zudem wird in der digitalen Signalverarbeitung eine Amplitude $I_{S0}$ der Grundwelle des Bewegungsstroms ermittelt, die ein Maß für die Schwingungsamplitude der Last 7, d.h. des Ultraschallgerätes ist.

Ein resonatorischer Betrieb der Last 7 wird durch eine Stabilisierung des Systems im Phasennulldurchgang der Bewegungsadmittanz verbessert. Hierzu wird beispielsweise eine digitale Phasenregelung (PLL) eingesetzt, die über eine Stellgröße $f_B$ die Betriebsfrequenz des digitalen Pulssignalgenerators 3 bestimmt. Eine Stabilisierung der Schwingamplitude geschieht über eine digitale Amplitudenregelung, die über die Stellgröße M einen Modulationsgrad des digitalen Pulssignalgenerators und damit die Spannungs-Zeit-Fläche der Ausgangsspannung $U_T$ des Wechselrichters steuert. Zur Ermittlung des Modulationsgrades $M_{soll}$ und der Betriebsfrequenz $f_{Bsoll}$ verwendet die digitale Signalverarbeitung 10 Sollwerte für die Amplitude $I_{SOsoll}$ und Sollwerte für den Phasenwinkel $\Phi_{YSsoll}$. Aus dem Vergleich zwischen den erfassten Werten für die Amplitude und dem Phasenwinkel mit dem Sollwert für die Amplitude und dem Sollwert für die Phasenwinkel ermittelt die digitale Regelung 11 den Sollwert für den Modulationsgrad und den Sollwert für die Betriebsfrequenz. Die Sollwerte für den Modulationsgrad und die Betriebsfrequenz werden einer Stellgrößenquantisierung 12 zugeführt.

Die Stellgrößenquantisierung 12 beschreibt Quantisierungseffekte in den Stellgrößen Betriebsfrequenz $f_B$ und Modulationsgrad M aufgrund der endlichen Zeitauflösung und Zahlendarstellung der elektronischen Schaltung. Die digitale Steuerung ist beispielsweise auf einen Mikrocontroller implementiert. Abhängig von der gewählten technischen Realisierung kann auf die Stellgrößenquantisierung verzichtet werden.

Der digitale Pulssignalgenerator 3 aktiviert über Steuersignale $Z_{W1}$, $Z_{W2}$, $Z_{W3}$ und $Z_{W4}$ vier Schalttransistoren des Wechselrichters 2, so dass mit Spannungspulsen die gewünschte Ansteuerspannung $U_T$ erzeugt wird. Bei einer vorgegebenen Anzahl > 2 von Stützstellen pro Periode erfordert die digitale Signalverarbeitung eine exakte Erfassung einer Signalperiode, so dass eine Abtastfrequenz der A/D-Wandler der digitalen Messwertkorrektur 9 an die Betriebsfrequenz gekoppelt werden sollte. Das verwendete digitale System weist somit eine variable Abtastrate auf, die an die Betriebsfrequenz $f_B$ angepasst wird. Dazu wird von der Stellgrößenquantisierung 12 die Betriebsfrequenz $f_B$ sowohl an die digitale Signalverarbeitung 10 als auch an die Messwertkorrektur 9 als Stellwert zugeführt.

Abhängig von der gewählten Anzahl der Schalttransistoren des Wechselrichters weist der digitale Pulssignalgenerator 3 mehr oder weniger Steuersignale auf. In dem dargestellten Beispiel sind es vier Steuersignale.

Der Begriff Bewegungsstrom $I_S$ bezeichnet den Strom, der durch die Bewegungskomponenten des Aktors erzeugt wird. Die Betriebsfrequenz $f_B$ wird im geregelten Betrieb des Resonanzstromrichters durch den Phasennulldurchgang der Bewegungsadmittanz festgelegt, der sich aus dem Frequenzgang der Bewegungsadmittanz nach folgender Formel ermitteln lässt: $Y_S(\Omega) = I_S(\Omega)/U_P(\Omega)$.

Der digitale Pulssignalgenerator 3 ermittelt abhängig vom Modulationsgrad M nach festgelegten Verfahren die Steuerpulse. Dabei werden bekannte Fourierberechnungsverfahren verwendet. Mithilfe der Berechnungsverfahren werden die Länge und die Zeitpunkte der vom Wechselrichter abzugebenden Spannungspulse in der Weise berechnet, dass die gewünschten Oberwellen reduziert bzw. eliminiert sind. Beispielsweise verfügt der Pulssignalgenerator 3 über einen Speicher, in dem Wertetabellen für die Vorgabe der Zeitpunkte und Zeitdauern der Steuerpulse in Abhängigkeit vom Modulationsgrad oder in Abhängigkeit vom Modulationsgrad und von der Anzahl der Steuerpulse abgelegt sind.

Weiterhin verfügt der Pulssignalgenerator 3 über einen weiteren Steuereingang, dem ein Steuersignal der digitalen Signalverarbeitung 10 zugeführt wird. Die digitale Signalverarbeitung 10 ermittelt in Abhängigkeit von Parametern wie z.B. der elektrischen Leistung, die vom Wechselrichter abgegeben wird, die Anzahl der Spannungspulse, die vom Wechselrichter abgegeben werden sollen. Abhängig vom zugeführten Steuersignal wählt der Pulssignalgenerator entsprechende Zeitpunkte und Zeitdauern für die Steuersignale aus der Wertetabelle aus. Anstelle der Wertetabelle können auch andere Verfahren zur Festlegung der Zeitpunkte und Zeitdauern der Steuersignale abhängig vom Modulationsgrad und/oder der elektrischen Leistung und/oder anderen Parametern verwendet werden.

Abhängig von der gewählten Ausführungsform können verschiedene Arten von Wechselrichter, d.h. getaktete Verstärker, verwendet werden. Wechselrichter weisen Schalter, insbesondere Halbleiterschalter auf, mit denen eine entsprechend getaktete Schaltung vorgenommen werden kann.

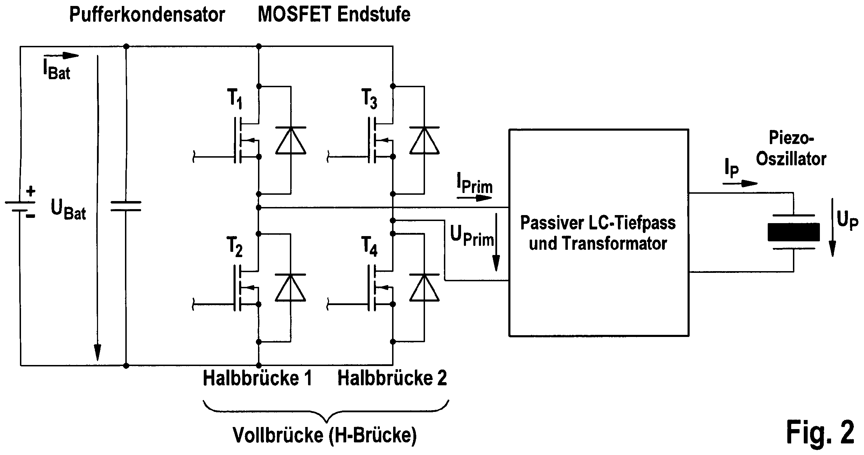

Fig. 2 zeigt die Ausbildung eines Wechselrichters in Form einer Vollbrücke. Die Vollbrücke weist als Schalter MOSFET-Transistoren T1, T2, T3, T4 auf. Jeder der Transistoren wird vom digitalen Pulssignalgenerator 3 mit einem entsprechenden Steuersignal versorgt, um an den Ausgängen die gewünschten Spannungspulse und den gewünschten Strom bereitzustellen. Die Vollbrücke weist zwei Halbbrücken auf, wobei deren Transistoren nicht gleichzeitig eingeschaltet sein dürfen.

Für den Betrieb der Vollbrücke existieren vier zulässige, eindeutige Schaltzustände. Diese werden auch Treiben, Rückspeisen, Freilauf unten und Freilauf oben genannt. Beim Treiben sind der erste Transistor T1 und der vierte Transistor T4 leitend, das heißt eingeschaltet. Der zweite Transistor T2 und der dritte Transistor, T3 sind nicht leitend, das heißt ausgeschaltet. Beim Treiben liegt die Batteriespannung $U_{Bat}$ am Ausgang der Vollbrücke an. Beim Rückspeisen sind der erste Transistor T1 und der vierte Transistor T4 nicht leitend, dass heißt ausgeschaltet. Der zweite Transistor und der dritte Transistor T2, T3 sind eingeschaltet. Beim Rückspeisen liegt am Ausgang der Vollbrücke die negative Batteriespannung $-U_{Bat}$ an. Im Zustand Freilauf unten sind der erste Transistor T1 und der dritte Transistor T3 ausgeschaltet. Der zweite und vierte Transistor T2, T4 sind eingeschaltet. Am Ausgang liegt keine Spannung an. Im Zustand Freilauf oben sind der erste und der dritte Transistor T1, T3 eingeschaltet und der zweite und dritte Transistor T2, T4 ausgeschaltet. Auch im Zustand Freilauf oben liegt am Ausgang der Vollbrücke keine Spannung an.

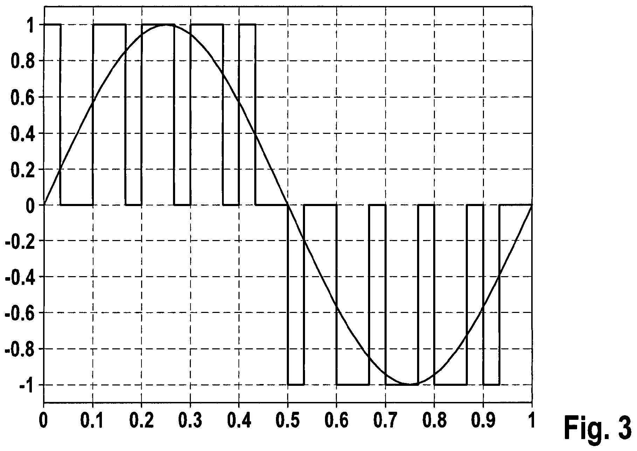

Figur 3 zeigt in einer schematischen Darstellung ein Beispiel für die Spannungspulse, die der Wechselrichter bei der Verwendung von der Anzahl von fünf Spannungspulsen pro Halbperiode zur Erzeugung einer sinusförmigen Ausgangsspannung abgibt.

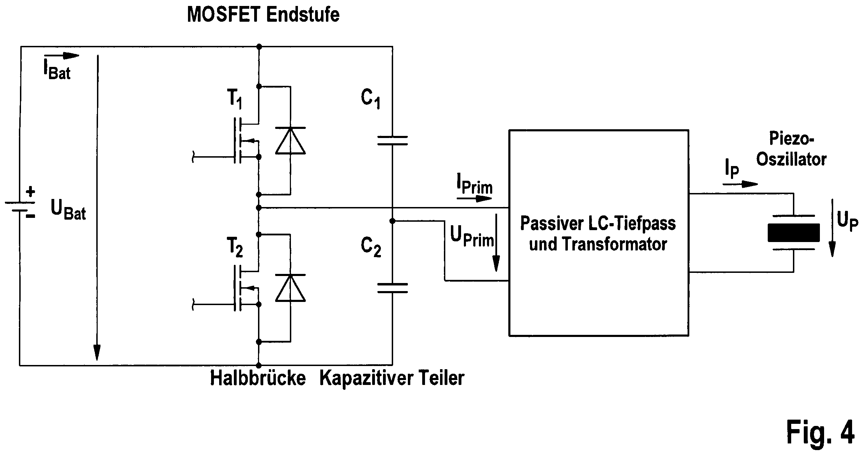

Abhängig von der gewählten Ausführungsform kann anstelle einer Vollbrücke für den Wechselrichter auch eine Halbbrücke verwendet werden, die in Figur 4 dargestellt ist. Der Vorteil der Halbbrücke besteht in der geringeren Anzahl der Transistoren. Die Halbbrücke wird in der Weise betrieben, dass der Transformator am Eingang einen reinen Wechselstrom sieht, so dass ein kapazitiver Spannungsteiler nur mit einem reinen Wechselstrom belastet wird. Dadurch bleibt der Mittelpunkt der Spannungsteiler im Mittelpunkt einer festen Spannung stehen. Ein Vorteil der Halbbrücke gegenüber der Vollbrücke besteht darin, dass weniger Transistoren erforderlich sind. Weiterhin verhindert der kapazitive Teiler am Ausgang der Halbbrücke eine mögliche Gleichspannungsbelastung des Transformators. Für die Ansteuerung der Halbbrücke bestehen zwei zulässige Schaltzustände. Ein erster Schaltzustand wird mit Speisen bezeichnet und sorgt dafür, dass am Ausgang der Halbbrücke die halbe Batteriespannung $1/2U_{Bat}$ anliegt. Dazu ist der erste Transistor T1 leitend, dass heißt eingeschaltet und der zweite Transistor T2 ausgeschaltet. Bei dem zweiten Zustand, der als Rückspeisen bezeichnet wird, ist der erste Transistor T1 ausgeschaltet, dass heißt nicht leitend geschaltet und der zweite Transistor T2 eingeschaltet, dass heißt leitend geschaltet. Am Ausgang der Halbbrücke steht im Betriebszustand Rückspeisen eine negative halbe Batteriespannung $-1/2U_{Bat}$ an.

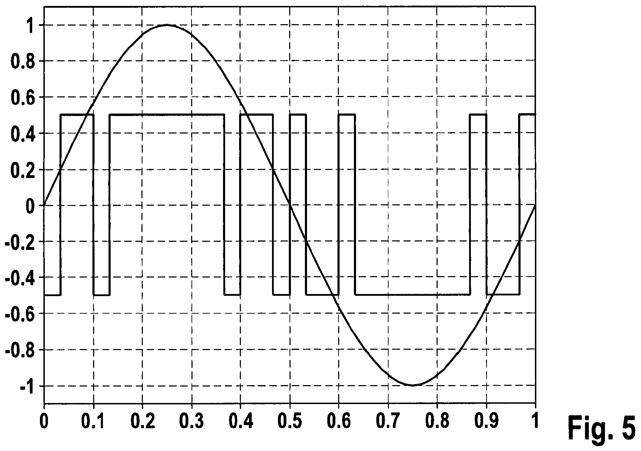

Figur 5 zeigt die getakteten Ausgangssignale der Halbbrücke, wobei drei Spannungspulse für die Formung während einer Halbperiode verwendet werden. Zusätzlich ist die Spannungs-Zeit-Fläche der Spannungspulse dargestellt. Die Spannungs-Zeit-Fläche entspricht der Grundwelle des Schaltsignals.

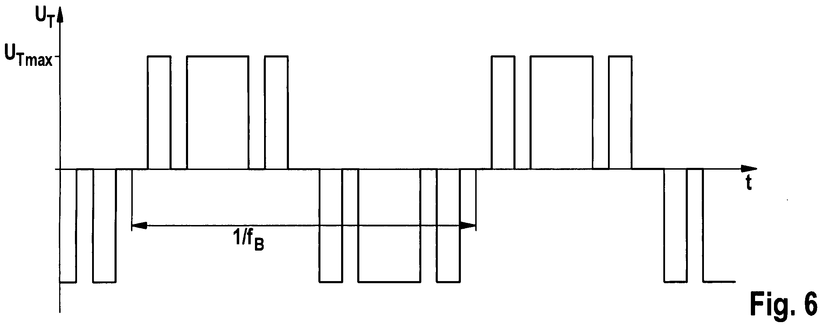

Figur 6 zeigt ein Diagramm über eine symmetrische Anordnung von Spannungspulen pro Halbwelle des pulsweitenmodulierten Signals über die Zeit t aufgetragen. Die Spannungspulse sind mittensymmetrisch zu einer halben Periode der Ausgangsspannung angeordnet. Als Orientierung ist die Periode $1/f_B$ der Ausgangsspannung des Wechselrichters eingezeichnet. In dem vorliegenden Ausführungsbeispiel wird ein mittiger Spannungspuls von zwei Spannungspulsen begleitet, wobei ein erster Spannungspuls zeitlich voraus läuft und ein zweiter Spannungspuls sich zeitlich anschließt. Der mittlere Spannungspuls ist zeitlich länger als die zwei begleitenden Spannungspulse.

Die beschriebene Anordnung weist einen resonanz- bzw. antiresonanzstabilisierten Betrieb zu einer Maximierung der Schwingungsamplitude auf. Durch die schaltende Ansteuerung des Wechselrichters wird eine Reduktion der Gesamtverluste erreicht. Weiterhin ist vorzugsweise ein Leistungsfilter zur Dämpfung von Oberwellen im Ansteuersignal vorgesehen. Zudem können Hochfrequenzwicklungen im Transformator zur Reduktion der Kupferverluste verwendet werden. Die verwendete Messschaltung ist kostengünstig und verlustarm. Abhängig von der verwendeten Ausführungsform können Transformatorstreuinduktivitäten zur Reduktion von Verlusten, Bauraum, Gewicht und Kosten für zusätzliche Filterbauelemente berücksichtigt werden. Der verwendete Pulssignalgenerator reduziert oder vermeidet die Erzeugung von Oberwellen, sodass geringere Verluste im Schwingsystem entstehen. Zudem sind dadurch kleinere Filterbauelemente und geringere Verluste in den leistungselektronischen Komponenten gegeben.

Der digitale Anteil der Steuerung kann in Form eines Mikrocontrollers ausgebildet sein. Dadurch wird eine kostengünstige Realisierung der resonanz- bzw. antiresonsanzstabilisierenden Phasenregelung und der überlagerten Amplitudenregelung, sowie einer Initialisierungs- und Überwachungsfunktion ermöglicht. Mit Hilfe der digitalen Messwertkorrektur für die Messschaltungen wird eine kostenneutrale Korrektur ermöglicht. Die Signalverarbeitung verwendet einen Goertzel-Algorithmus und es findet eine Kompensation der Piezokapazität zur Extraktion der möglichen Formation für den resonanz- und amplitudenstabilisierten Betrieb statt. Weiterhin können in einer Ausführungsform digitale Phasen- und Amplitudenregler mit einer Anti-Wind-Up-Funktion verwendet werden.

Aufgrund der verbesserten Funktionsweise des Pulssignalgenerators können die Leistungsfilter verkleinert ausgelegt werden.

Abhängig von der gewählten Ausführungsform können zur Verbesserung der Frequenzauflösung des Pulsmusters mehrere Kanäle zur Erzeugung eines pulsweitenmodulierten Signals verwendet werden, die über eine Logikschaltung zusammengefügt werden, um das gewünschte Pulsweitenmodulierte Signal zur Ansteuerung des Wechselrichters bereitzustellen.

Durch den Einsatz der digitalen Messwertverarbeitung unter Verwendung von FFT-Algorithmen bzw. einer digitalen Fouriertransformation unter Verwendung des Goertzel-Algorithmus, werden die zur Regelung benötigten Frequenzbänder gezielt analysiert. Dadurch kann die analoge Signalaufbereitung für die Strom- und Spannungssignale deutlich vereinfacht werden. Mit Hilfe der digitalen Messwerterfassung kann gemeinsam die Phasen- und Amplitudeninformation ermittelt werden. Abhängig von der gewählten gewählten Ausführungsform kann der analoge Messwertpfad nur noch mit Verstärker und Filter ausgebildet sein. Als Verstärker kann ein Operationsverstärker und ein aktiver Filter zweiter Ordnung verwendet werden. Abhängig von der gewählten Ausführungsform kann auch ein Filter erster Ordnung oder ein Filter höherer Ordnung verwendet werden. Dabei können spezielle Filtertopologien wie z. B. Butterworth oder Tschebyshev eingesetzt werden. Abhängig von der gewählten Ausführungsform kann der Signalpfad auch ohne analoge Filter bei der Messwerterfassung und nur mit einem Vorverstärker ausgebildet sein.

In einer weiteren Ausführungsform kann beispielsweise ein kompletter Signalpfad eliminiert werden. Das heißt es wird nur noch beispielsweise ein Stromwert bzw. in einer anderen Ausführungsform ein Spannungswert erfasst. Der fehlende zweite Signalpfad wird durch Rückrechnung aus dem Anregungssignal aufgrund genauer Kenntnis der Phasenverschiebung im Leistungspfad für den Pulssignalgenerator, den Wechselrichter, den Trafo und den Leistungsfilter berechnet.

Vorzugsweise ist die digitale Signalverarbeitung in einem Mikrocontrollersystem mit DSP-Funktionalität eingebettet. Dabei können FPGA oder Asicbausteine verwendet werden. Beispielsweise kann ein System mit Riskarchitektur eingesetzt werden. Zudem können digitale Signalprozessoren eingesetzt werden. Die Rechenleistung sollte größer als zwei Mips, besser größer als zehn Mips, oder größer als 30 Mips sein. Für die Erzeugung der pulsweitenmodulierten Spannung sollte die Auflösung besser 40 ns oder besser als 5 ns oder besser als 1,2 ns oder besser als 200 ps sein.

In einer weiteren Ausführungsform verwendet die digitale Signalverarbeitung eine interne Taktquelle, die beispielsweise ohne externen Schwingquarz funktioniert. In einer weiteren Ausführungsform kann eine einstellbare externe Taktquelle verwendet werden, wobei eine Anregefrequenz im Feinbereich nicht mehr digital, sondern durch Anpassung der Prozessortaktfrequenz möglich ist.

In einer weiteren Ausführungsform wird die Streuinduktivität des Transformators zur Erhöhung der Serieninduktivität im LC-Leistungsfilter verwendet. Dabei wird ein Transformatorwindungskonzept mit einem angepassten Kopplungsfaktor verwendet, so dass die Streuinduktivitäten im wesentlichen oder vollständig durch den Transformator gebildet werden. Beispielsweise ist der Kopplungsfaktor kleiner 0,99 oder kleiner 0,985. Zudem kann ein Transformator mit separierten primären und sekundären Windungen mit speziellen Wickelkörpern bei E-Kemen oder durch Einsatz eines U-Kerns eingesetzt werden. Die Betriebsspannung kann mit Hilfe eines Längsreglers oder mit Hilfe eines externen Schaltreglers eingestellt werden. Dazu kann eine Anlaufhilfe z. B. in Form eines abschaltbaren Spannungsteilers verwendet werden, bis der Mikrocontroller mit seinen eigenen Schaltreglern selbst Strom produziert.

In einer weiteren Ausführungsform, die mit einer Betriebsspannung von 230 V arbeitet, kann ein Amplitudenreglersystem verwendet werden, das schnell genug ist, um die sinusförmigen Spannungsänderungen der Netzfrequenz (nach dem Gleichrichten z. B. 100 Hz) auszuregeln. Dabei kann auf eine Glättung durch Pufferkondensatoren teilweise oder sogar ganz verzichtet werden. Weiterhin kann eine Baugrößenoptimierung durch Zulassung erhöhter Spannungsschwankungen in der Zwischenkreisspannung (Spannung nach dem Gleichrichten und Glätten) erfolgen. Dabei können zulässige Spannungsabfälle im größer als 5 % oder größer als 10 % oder größer als 30 % zugelassen werden. In einer weiteren Ausführungsvariante kann auf einen Zwischenkreisfilter ganz oder nahezu ganz verzichtet werden (Spannungsabfall größer als 80 %, optional größer als 90 %, im Spezialfall auch 100 %, d. h. eine gleichgerichtete Sinusspannung). Vorzugsweise weist die digitale Signalverarbeitung ein System mit einer schnellen Regelgeschwindigkeit auf, wobei die Regelfrequenz größer als 30 Hz oder größer 100 Hz oder größer 200 Hz aufweist. Weiterhin kann das Schwingsystem auch dergestalt ausgelegt sein, dass das Schwingsystem aufgrund seiner mechanischen Trägheit eine relativ lange Einschwingkonstante aufweist. Netzfrequenzbedingte Schwankungen der Anregespannung (im z. B. 100 Hz-Rhythmus) führen nur zu einer geringeren Änderungen der Schwingamplitude des Konverters. Die Einschwingzeiten sollten im ungedämpften Zustand T > 3ms, besser T > 5 ms, noch besser T > 10 ms sein.

Die Leistung des Ultraschallgerätes, insbesondere des Ultraschallelektrowerkzeugs kann > 5 W, typischerweise > 20 W betragen. Die Betriebsfrequenzen eines Resonanzsystems liegen im Bereich von 15 kHz bis 100 kHz, typischerweise zwischen 20 kHz und 60 kHz. Weiterhin können schnell schaltende MOSFET-Transistoren als Schalter im Wechselrichter eingesetzt werden, deren Schaltzeit (t rise -+ t fall) < 50 ns, besser kürzer 20 ns, vorzugsweise kürzer 10 ns ist. Weiterhin können vorzugsweise MOSFET-Transistoren mit kleinem Widerstand zwischen Drain und Source im eingeschalteten Zustand verwendet werden, deren Widerstand < 20 mOhm , besser < 10 mOhm, noch besser < 5 mOhm ist. Weiterhin können Mittel vorgesehen sein, um einen Signalton beispielsweise beim Betrieb oder bei einer Fehlerfunktion des Ultraschallgeräts zu erzeugen. Zudem können Mittel vorgesehen sein, um ein Statuslicht oder eine Arbeitsfeldbeleuchtung für das Ultraschallgerät bereitzustellen. Zudem können Mittel zur Akküberwachung vorgesehen sein, die beispielsweise den Strom, die maximale Spannung, die minimale Spannung, die maximale Temperatur oder die minimale Temperatur der Leistungselektronik erfassen.

Im Folgenden wird die Berechnung der optimierten Steuerpulse für den digitalen Pulssignalgenerator erläutert, um Oberwellen in der Ausgangsspannung des Wechselrichters wenigstens zu reduzieren oder vollständig zu unterdrücken.

In leistungselektronischen Schaltungen wird oft die so genannte Pulsweitenmodulation (PWM) verwendet. Die PWM-Modulation zeichnet sich dadurch aus, dass die Gesamt-Periodendauer der Ansteuerung konstant belassen wird. Es wird nur die Einschaltdauer der Transistoren verändert. Eine Besonderheit in dieser Anwendung ist die Verwendung einer synchronen PWM-Ansteuerung. Die PWM-Periodendauer ist fest mit der Grundschwingungsdauer der Piezospannung verkoppelt. Dies liegt vor allem darin begründet, dass die Synchronizität bei kleinen Taktzahlen Vorteile bietet. Da die Schaltfrequenzen begrenzt sind, erhält man bei großen Ausgangsfrequenzen automatisch kleine Taktzahlen.

Bei der PWM-Ansteuerung wird zunächst die gesamte Sinusperiode der Ausgangsspannung in $2 \cdot z_T$ gleiche

Zeitabschnitte unterteilt. Zur Ermittlung der einzustellenden relativen Einschaltdauer innerhalb einer Pulsperiode kann z.B. auf folgende Berechnung zurückgegriffen werden: Die mittlere Spannung der PWM modulierten Ausgangsspannung einer PWM-Periode soll gleich der sinusförmigen Spannung in der Mitte dieser PWM-Periode sein.

Eine sinusförmige Grundwelle mit Modulationsgrad m kann durch folgende Gleichung 1 beschrieben werden:

$$U_{a,\sin}(t) = m \cdot U_{bat} \cdot \sin\left(\frac{2 \cdot \pi}{T} \cdot t\right)$$

Mit

m: Modulationsgrad (Steuergröße für die Einstellung der Spannungsamplitude eines Wechselrichters)
T: Periodendauer der sinusförmigen Ausgangsspannung (Piezo-Frequenz-Periodendauer)
$U_{a,\sin}(t)$: Ausgangs-Grundwelle
$U_{bat}$ Batteriespannung

Daraus können die Tastverhältnisse der Ausgangsspannung des Wechselrichters mit folgender Gleichung 2 berechnet werden:

$n = 1,2...z_T$

$$\tau_n = m \cdot \sin\left\{\frac{2 \cdot \pi}{T} \cdot \left(n - \frac{1}{2}\right) \cdot \frac{T}{2 \cdot z_T}\right\} = m \cdot \sin\left\{\frac{\pi}{z_T} \cdot \left(n - \frac{1}{2}\right)\right\}$$

Mit

$\tau_n$: Tastverhältnis der PWM-Periode n
n: Index der PWM-Perioden

Für die negative Hälfte der Sinusperiode sind die Tastverhältnisse gleich wie bei der ersten Hälfte, es müssen nur die Ausgangszustände mit negativer Ausgangsspannung ("Rückspeisen") anstatt der Zustände mit positiver Ausgangsspannung eingestellt werden.

**Aus**

$n = 1,2...z_T$

$$\tau_n = m \cdot \sin\left\{\frac{2 \cdot \pi}{T} \cdot \left(n - \frac{1}{2}\right) \cdot \frac{T}{2 \cdot z_T}\right\} = m \cdot \sin\left\{\frac{\pi}{z_T} \cdot \left(n - \frac{1}{2}\right)\right\}$$

$n = 1,2...z_T$ kann man erkennen, dass die Tastverhältnisse unabhängig von der Periodendauer sind. Es muss für diese Ansteuerung nur eine "Sinustabelle" mit $z_T$ Werten angelegt werden. Die Skalierung der Ausgangsspannung erfolgt durch eine einfache Multiplikation mit dem Modulationsgrad m. Die Positionierung der Ansteuerpulse innerhalb der PWM-Periodendauer kann sowohl "edge-aligned" als auch "centeraligned" erfolgen.

Ein Vorteil dieses Ansteuerverfahrens liegt in der Erzeugung der Ansteuersignale. Die meisten Mikrocontroller besitzen bereits vollständige PWM-Einheiten in der Peripherie, die nur noch mit der gewünschten Periodendauer und dem Modulationsgrad eingestellt werden müssen. Dadurch ist der Hardwareaufwand außerhalb des Mikrocontrollers minimal.

Für die Berechnung der "Frequenzspektren" bzw. Amplituden der Harmonischen wird in diesen Berechnungen die Fourier-Reihe verwendet. Diese ist ideal für die Berechnungen an periodischen Signalen geeignet. Diese Berechnung ist hier einfacher durchzuführen als ein Fourier-Spektrum mit anschließender Abtastung an den Stellen der harmonischen Frequenzen.

Eine reelle Normalform der Fourier-Reihe kann mit folgender Gleichung 3 dargestellt werden:

$$f(t) = \frac{a_0}{2} + \sum_{n=1}^{\infty} \left[a_n \cdot \cos(n \cdot \omega \cdot t) + b_n \cdot \sin(n \cdot \omega \cdot t)\right]$$

Mit

f(t): Funktion die durch die Fourier-Reihe angenähert wird

$a_0$: Koeffizient der den Mittelwert beschreibt

n: Zählvariable, Nummer der Harmonischen bzw. Faktor für die Erhöhung der Grund-Frequenz

$a_n$: Koeffizienten der cos-Reihe

$b_n$: Koeffizienten der sin-Reihe

$\omega$: Kreisfrequenz der Grundschwingung $\omega = 2 * \pi / T$

Für die Berechnung der Koeffizienten gelten folgende Gleichungen:

$$a_n = \frac{2}{T} \int_0^T f(t) \cdot \cos(n \cdot \omega \cdot t) \cdot dt$$

$$n = 1,2,3.....$$

## Gleichung 4

$$b_n = \frac{2}{T} \int_0^T f(t) \cdot \sin(n \cdot \omega \cdot t) \cdot dt$$

$$n = 1,2,3.....$$

## Gleichung 5

$$a_0 = \frac{2}{T} \int_0^T f(t) \cdot dt$$

## Gleichung 6

Es existiert auch eine komplexe Form der Fourier-Reihe. Diese fasst die Koeffizienten $a_n$ und $b_n$ zu einem gemeinsamen Koeffizienten $c_n$ (Betrag) und einer Phase $\varphi_n$ zusammen. Diese Form ist vor allem bei der Berechnung des Ausgangsspektrums wichtig, wenn noch ein Filter mit im Signalpfad liegt. Für die Berechnung der optimierten Pulse wird diese Form nicht benötigt.

Um optimierte Signale zu erzeugen bzw. zu berechnen, müssen zuerst die Grundsignale und die Parameter für die Optimierung definiert werden.

Das Ziel der Optimierung ist es, die niederen Harmonischen möglichst vollständig zu eliminieren und die Grundwelle definiert einzustellen. Durch geschickte Ausnutzung der Symmetrie können bestimmte Koeffizienten von vorne herein eliminiert werden.

1. Symmetriebedingung: Das Ausgangssignal soll punktsymmetrisch zu T/2 sein. =>alle $a_n$ werden zu null.

2. Symmetriebedingung: Das Ausgangssignal soll mittelwertfrei sein => $a_0$ wird zu null.

3. Symmetriebedingung: Die Pulse bis T/2 sollen spiegelsymmetrisch zu T/4 liegen und die Pulse zwischen T/2 und T sollen spiegelsymmetrisch zu 3T/4 liegen =>alle geradzahligen $b_n$ werden zu null.

Es müssen also in der weiteren Betrachtung noch die ungeradzahligen $b_n$ betrachtet werden.

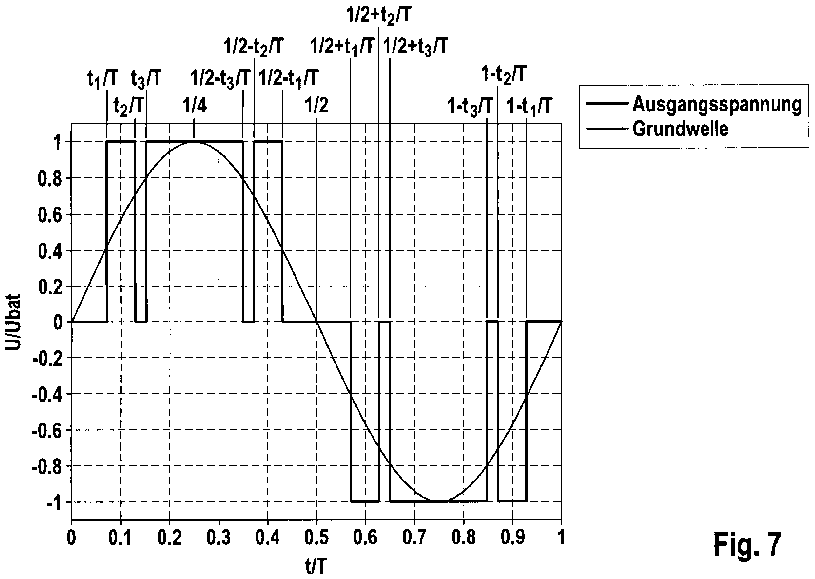

Fig. 7 zeigt eine Definition der optimalen Pulse mit Parametern für eine Vollbrücke $z_T = 3$.

Es sind die Pulse für eine Vollbrücke bei der Taktzahl 3 zu erkennen. Alle Randbedingungen werden eingehalten und es bleiben 3 freie Parameter bestehen.

In analoger Weise können für eine Halbbrücke die Pulse ausgeführt werden. Dabei liegen wieder die drei freien Parameter $t_1/T$, $t_2/T$ und $t_3/T$ vor.

Die Fourier-Koeffizienten werden folgendermaßen berechnet: Durch die Variation der Parameter $t_1/T$, $t_2/T$ und $t_3/T$ kann das Gesamtspektrum der Ausgangsspannung beeinflusst werden. Um dies zu bewerten, muss zunächst das Gesamtspektrum hergeleitet werden. Da die Fourier-Transformation (also auch die Fourier-Reihe) eine lineare Abbildung ist, gilt das Superpositionsprinzip. Die Summe der Spektren der Einzelpulse entspricht dem Spektrum der Gesamtfunktion, die aus einer Summe von Einzelpulsen besteht. In diesem Sinn kann also das Spektrum eines Einzelpulses berechnet werden. Das Gesamtspektrum ergibt sich dann als Summe der Spektren der einzelnen Pulse d.h. der Summe der entsprechenden Fourier-Koeffizienten.

Von einem rechteckförmigen Einzelpuls mit einem zeitlichen Startpunkt $t_a$ und einem zeitlichen Endpunkt $t_e$ mit konstanter Amplitude können jetzt die entsprechenden Fourier-Koeffizienten berechnet werden. Hier werden nur die Koeffizienten $b_n$ berechnet. Für diesen Einzelpuls existieren zwar auch von Null abweichende Werte für die Koeffizienten $a_n$. Diese heben sich jedoch bei der folgenden Addition zum Gesamtspektrum auf.

Es ergibt sich folgendes:

$$b_n = \frac{2}{T} \int_{t_a}^{t_e} A \cdot \sin\left( n \cdot \frac{2 \cdot \pi}{T} \cdot t \right) \cdot dt = \frac{2 \cdot A}{T} \cdot \left[ -\frac{T}{n \cdot 2 \cdot \pi} \cdot \cos\left( n \cdot \frac{2 \cdot \pi}{T} \cdot t \right) \right]_{t_a}^{t_e}$$

$$b_n = \frac{A}{n \cdot \pi} \left[ \cos\left( n \cdot 2 \cdot \pi \cdot \frac{t_a}{T} \right) - \cos\left( n \cdot 2 \cdot \pi \cdot \frac{t_e}{T} \right) \right]$$

## Gleichung 7

Aus der Definition des Gesamtsignals können die Zeiten für die einzelnen Pulse entnommen werden. Das Gesamtspektrum ergibt sich als Summe der Einzelspektren:

$$b_{n,ges} = \frac{A}{n \cdot \pi} \left[ \cos\left( n \cdot 2 \cdot \pi \cdot \frac{t_1}{T} \right) - \cos\left( n \cdot 2 \cdot \pi \cdot \frac{t_2}{T} \right) \right] +$$

$$\frac{A}{n \cdot \pi} \left[ \cos\left( n \cdot 2 \cdot \pi \cdot \frac{t_3}{T} \right) - \cos\left( n \cdot 2 \cdot \pi \cdot \left( \frac{1}{2} - \frac{t_3}{T} \right) \right) \right] +$$

$$\frac{A}{n \cdot \pi} \left[ \cos\left( n \cdot 2 \cdot \pi \cdot \left( \frac{1}{2} - \frac{t_2}{T} \right) \right) - \cos\left( n \cdot 2 \cdot \pi \cdot \left( \frac{1}{2} - \frac{t_1}{T} \right) \right) \right] -$$

$$\frac{A}{n \cdot \pi} \left[ \cos\left( n \cdot 2 \cdot \pi \cdot \left( \frac{1}{2} + \frac{t_1}{T} \right) \right) - \cos\left( n \cdot 2 \cdot \pi \cdot \left( \frac{1}{2} + \frac{t_2}{T} \right) \right) \right] -$$

$$\frac{A}{n \cdot \pi} \left[ \cos\left( n \cdot 2 \cdot \pi \cdot \left( \frac{1}{2} + \frac{t_3}{T} \right) \right) - \cos\left( n \cdot 2 \cdot \pi \cdot \left( 1 - \frac{t_3}{T} \right) \right) \right] -$$

$$\frac{A}{n \cdot \pi} \left[ \cos\left( n \cdot 2 \cdot \pi \cdot \left( 1 - \frac{t_2}{T} \right) \right) - \cos\left( n \cdot 2 \cdot \pi \cdot \left( 1 - \frac{t_1}{T} \right) \right) \right]$$

## Gleichung 8

Das Gesamtspektrum besteht hier aus einer Summe aus 6 Teilen, die jeweils einem Einzelpuls entsprechen. Für das Spektrum einer Halbbrücken-Ausgangsspannung oder eines Signals mit höherer Taktzahl sind entsprechend mehr Teilglieder vorhanden.

Berechnung der Parameter für Taktzahl 3 und Vollbrücke.

Zunächst müssen die Randbedingungen für die Suche nach den geeigneten Werten für $t_1$, $t_2$ und $t_3$ definiert werden.
Definitionen:

1. Randbedingung: Die Grundwelle der Ausgangsspannung soll linear über einen Modulationsgrad m einstellbar sein.

$$A = U_{bat}$$
$$b_{1,ges} = m \cdot U_{bat}$$

Gleichung 9 eingesetzt in Gleichung 8 ergibt:

$$m \cdot U_{bat} = \frac{U_{bat}}{\pi}\left[\cos\left(2\cdot\pi\cdot\frac{t_1}{T}\right)-\cos\left(2\cdot\pi\cdot\frac{t_2}{T}\right)\right]+\frac{U_{bat}}{\pi}\left[\cos\left(2\cdot\pi\cdot\frac{t_3}{T}\right)-\cos\left(2\cdot\pi\cdot\left(\frac{1}{2}-\frac{t_3}{T}\right)\right)\right]+$$

$$\frac{U_{bat}}{\pi}\left[\cos\left(2\cdot\pi\cdot\left(\frac{1}{2}-\frac{t_2}{T}\right)\right)-\cos\left(2\cdot\pi\cdot\left(\frac{1}{2}-\frac{t_1}{T}\right)\right)\right]-\frac{U_{bat}}{\pi}\left[\cos\left(2\cdot\pi\cdot\left(\frac{1}{2}+\frac{t_1}{T}\right)\right)-\cos\left(2\cdot\pi\cdot\left(\frac{1}{2}+\frac{t_2}{T}\right)\right)\right]-$$

$$\frac{U_{bat}}{\pi}\left[\cos\left(2\cdot\pi\cdot\left(\frac{1}{2}+\frac{t_3}{T}\right)\right)-\cos\left(2\cdot\pi\cdot\left(1-\frac{t_3}{T}\right)\right)\right]-\frac{U_{bat}}{\pi}\left[\cos\left(2\cdot\pi\cdot\left(1-\frac{t_2}{T}\right)\right)-\cos\left(2\cdot\pi\cdot\left(1-\frac{t_1}{T}\right)\right)\right]$$

$$m = \frac{1}{\pi}\left[\cos\left(2\cdot\pi\cdot\frac{t_1}{T}\right)-\cos\left(2\cdot\pi\cdot\frac{t_2}{T}\right)\right]+\frac{1}{\pi}\left[\cos\left(2\cdot\pi\cdot\frac{t_3}{T}\right)-\cos\left(2\cdot\pi\cdot\left(\frac{1}{2}-\frac{t_3}{T}\right)\right)\right]+$$

$$\frac{1}{\pi}\left[\cos\left(2\cdot\pi\cdot\left(\frac{1}{2}-\frac{t_2}{T}\right)\right)-\cos\left(2\cdot\pi\cdot\left(\frac{1}{2}-\frac{t_1}{T}\right)\right)\right]-\frac{1}{\pi}\left[\cos\left(2\cdot\pi\cdot\left(\frac{1}{2}+\frac{t_1}{T}\right)\right)-\cos\left(2\cdot\pi\cdot\left(\frac{1}{2}+\frac{t_2}{T}\right)\right)\right]-$$

$$\frac{1}{\pi}\left[\cos\left(2\cdot\pi\cdot\left(\frac{1}{2}+\frac{t_3}{T}\right)\right)-\cos\left(2\cdot\pi\cdot\left(1-\frac{t_3}{T}\right)\right)\right]-\frac{1}{\pi}\left[\cos\left(2\cdot\pi\cdot\left(1-\frac{t_2}{T}\right)\right)-\cos\left(2\cdot\pi\cdot\left(1-\frac{t_1}{T}\right)\right)\right]$$

## Gleichung 10: erste Randbedingung

2. Randbedingung: Die 3.Harmonische der Ausgangsspannung soll 0 sein

$$b_{3,ges} = 0$$

## Gleichung 11

$$b_{3,ges} = 0 = \frac{1}{3 \cdot \pi}\left[\cos\left(6 \cdot \pi \cdot \frac{t_1}{T}_e\right) - \cos\left(6 \cdot \pi \cdot \frac{t_2}{T}\right)\right] +$$

$$\frac{1}{3 \cdot \pi}\left[\cos\left(6 \cdot \pi \cdot \frac{t_3}{T}_e\right) - \cos\left(6 \cdot \pi \cdot \left(\frac{1}{2} - \frac{t_3}{T}\right)\right)\right] +$$

$$\frac{1}{3 \cdot \pi}\left[\cos\left(6 \cdot \pi \cdot \left(\frac{1}{2} - \frac{t_2}{T}\right)\right) - \cos\left(6 \cdot \pi \cdot \left(\frac{1}{2} - \frac{t_1}{T}\right)\right)\right] -$$

$$\frac{1}{3 \cdot \pi}\left[\cos\left(6 \cdot \pi \cdot \left(\frac{1}{2} + \frac{t_1}{T}\right)\right) - \cos\left(6 \cdot \pi \cdot \left(\frac{1}{2} + \frac{t_2}{T}\right)\right)\right] -$$

$$\frac{1}{3 \cdot \pi}\left[\cos\left(6 \cdot \pi \cdot \left(\frac{1}{2} + \frac{t_3}{T}\right)\right) - \cos\left(6 \cdot \pi \cdot \left(1 - \frac{t_3}{T}\right)\right)\right] -$$

$$\frac{1}{3 \cdot \pi}\left[\cos\left(6 \cdot \pi \cdot \left(1 - \frac{t_2}{T}\right)\right) - \cos\left(6 \cdot \pi \cdot \left(1 - \frac{t_1}{T}\right)\right)\right]$$

## Gleichung 12: zweite Randbedingung

3. Randbedingung: Die 5. Harmonische der Ausgangsspannung soll 0 sein.

$$b_{5,ges} = 0$$

## Gleichung 13

$$b_{5,ges} = 0 = \frac{1}{5 \cdot \pi}\left[\cos\left(10 \cdot \pi \cdot \frac{t_1}{T}\right) - \cos\left(10 \cdot \pi \cdot \frac{t_2}{T}\right)\right] +$$

$$\frac{1}{5 \cdot \pi}\left[\cos\left(10 \cdot \pi \cdot \frac{t_3}{T}\right) - \cos\left(10 \cdot \pi \cdot \left(\frac{1}{2} - \frac{t_3}{T}\right)\right)\right] +$$

$$\frac{1}{5 \cdot \pi}\left[\cos\left(10 \cdot \pi \cdot \left(\frac{1}{2} - \frac{t_2}{T}\right)\right) - \cos\left(10 \cdot \pi \cdot \left(\frac{1}{2} - \frac{t_1}{T}\right)\right)\right] -$$

$$\frac{1}{5 \cdot \pi}\left[\cos\left(10 \cdot \pi \cdot \left(\frac{1}{2} + \frac{t_1}{T}\right)\right) - \cos\left(10 \cdot \pi \cdot \left(\frac{1}{2} + \frac{t_2}{T}\right)\right)\right] -$$

$$\frac{1}{5 \cdot \pi}\left[\cos\left(10 \cdot \pi \cdot \left(\frac{1}{2} + \frac{t_3}{T}\right)\right) - \cos\left(10 \cdot \pi \cdot \left(1 - \frac{t_3}{T}\right)\right)\right] -$$

$$\frac{1}{5 \cdot \pi}\left[\cos\left(10 \cdot \pi \cdot \left(1 - \frac{t_2}{T}\right)\right) - \cos\left(10 \cdot \pi \cdot \left(1 - \frac{t_1}{T}\right)\right)\right]$$

## Gleichung 14: dritte Randbedingung

Nun liegen drei Gleichungen (Gleichung 10, 12, 14) für die Bestimmung von 3 freien Parametern vor. Durch Lösen dieses Gleichungssystems können die Parameter für $t_1$, $t_2$ und $t_3$ in Anhängigkeit vom Modulationsgrad m bestimmt werden.

Da die freien Parameter als Argumente in transzendenten Funktionen stecken ist die analytische Lösung dieses Problems nicht trivial. In diesem Fall wurde das Problem numerisch gelöst. Für die Verwendung der optimalen Parameter in einer Mikrocontroller-Steuerung wird eine Wertetabelle für den Pulssignalgenerator mit den entsprechenden Werten für $t_1$, $t_2$ und $t_3$ in Abhängigkeit von dem Modulationsgrad m angelegt. Zwischenwerte werden interpoliert. Das Füllen der Tabelle kann einmalig durch eine numerische Rechnung erfolgen.

Die numerische Berechnung erfolgt folgendermaßen:
Zunächst werden der zulässige Wertebereich und ein Suchraster für die Parameter $t_1$, $t_2$ und $t_3$ gewählt. Des Weiteren wird ein maximal zulässiger Fehler für $b_{3,ges}$ und $b_{5,ges}$ festgelegt.

Jetzt wird für alle möglichen Kombinationen für $t_1$, $t_2$ und $t_3$ die Werte für m, $b_{3,ges}$ und $b_{5,ges}$ berechnet. Die Werte für $b_{3,ges}$ und $b_{5,ges}$ werden mit den zulässigen Fehlern verglichen. Sind die berechneten Werte beider Größen kleiner als der zulässige Fehler, wird die Kombination von m, $t_1$, $t_2$ und $t_3$ abgespeichert. Anschließend werden die Werte nach dem Modulationsgrad m geordnet. Zuletzt können die Daten so umgerechnet (Interpolation) werden, dass eine Tabelle mit äquidistanten Werte für den Modulationsgrad m vorliegt. Dabei kann eine Tabelle dieser Daten mit m-Schritten von 0,01 im Bereich von m = 0 bis m=1,05 verwendet werden.

Zuletzt können die Daten so umgerechnet (Interpolation) werden, dass eine Tabelle mit äquidistanten Werte für m vorliegt. Eine Tabelle dieser Daten mit m-Schritten von 0,01 von 0 bis 1,05 liegt für die Vollbrücke mit $z_t$=3, d.h. 3 Spannungspulse pro Halbperiode beispielsweise als Matlab-"mat"-File vor.

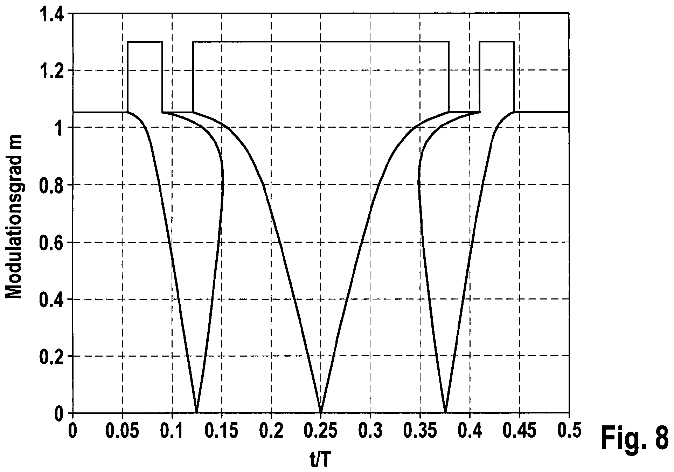

Fig. 8 zeigt einen Verlauf der Flanken über dem Modulationsgrad m.

Wie aus Fig. 8 hervorgeht, lassen sich die Flanken-Tabellenwerte bis zu einem Modulationsgrad von m=0,75 durch wenige Stützpunkte und lineare Interpolation gut annähern. Über einem Modulationsgrad von 0,75 sind deutlich mehr Stützstellen für eine genauere Interpolation notwendig.

Zur Kontrolle kann jetzt noch der Verlauf der einzelnen Harmonischen über dem Modulationsgrad dargestellt werden.

Die Berechnungen für andere Pulszahlen bzw. für andere Endstufen (Halbbrücke) können prinzipiell auf dieselbe Art und Weise erfolgen.

Im Folgenden wird ein Beispiel für die Berechnung der Parameter für die Taktzahl 3, d.h. 3 Spannungspulse pro Halbperiode und eine Halbbrücke erläutert.

Mit dem bis hierher entwickelten Verfahren werden nun die Ansteuerparameter für optimierte Pulse für eine Halbbrücke mit kapazitivem Teiler berechnet. Bei dieser Schaltung gibt es keine Freilaufzustände. Die Ausgangsspannung ist also entweder ½ $U_{bat}$ oder - ½ $U_{bat}$.

Dadurch ergibt sich folgendes Spannungspuls-Schema mit entsprechenden Freiheitsgraden:

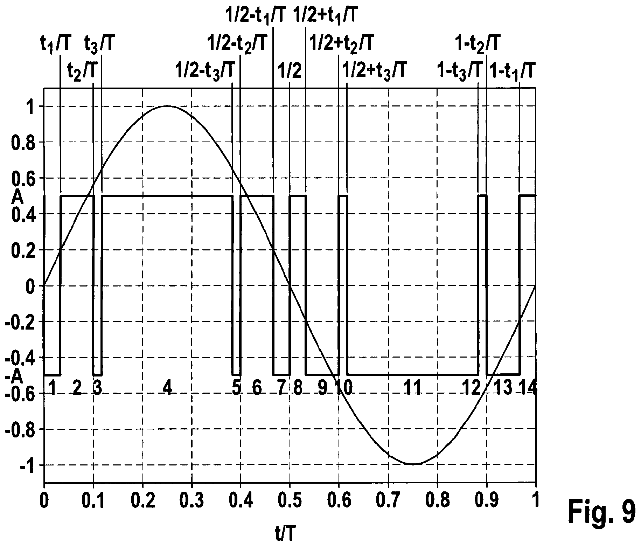

Fig. 9 zeigt eine Ausgangsspannung der Halbbrücke mit freien Parametern.

Aus Fig. 9 lässt sich genau erkennen, wie die Pulse liegen und wie die drei freien Parameter $t_1$, $t_2$ und $t_3$ die Form des Pulses bestimmen. Des Weiteren lässt sich erkennen, dass die Ausgangsspannung jetzt nicht mehr aus 6 Pulsen (3 positiven und 3 negative) sondern aus 14 Pulsen (7 positive und 7 negative) besteht. Die Berechnung des Gesamtspektrums bzw. der Randbedingungen wird dadurch komplexer aber nicht prinzipiell schwieriger. Durch die Einhaltung der Symmetriebedingungen werden die Fourier-Koeffizienten $a_n$ und die geradzahligen $b_n$ bereits zu Null.

Randbedingungen:

1. Die Grundwelle soll proportional zum Modulationsgrad m sein, wobei die Vollaussteuerung in der Nähe von m=1 sein soll.
2. die 3. Harmonische soll zu Null werden
3. die 5. Harmonische soll zu Null werden

**Zur einfacheren Darstellung der Gleichungen wird eine Abkürzung eingeführt Dazu werden die $b_n$ eines Einzelpulses berechnet (Gleichung 7)** :

$$b_n = \frac{2}{T}\int_{t_a}^{t_e} A \cdot \sin\left(n\cdot\frac{2\cdot\pi}{T}\cdot t\right)\cdot dt = \frac{2\cdot A}{T}\cdot\left[-\frac{T}{n\cdot 2\cdot\pi}\cdot\cos\left(n\cdot\frac{2\cdot\pi}{T}\cdot t\right)\right]_{t_a}^{t_e}$$

$$b_n\left(A;n;\frac{t_a}{T};\frac{t_e}{T}\right) = \frac{A}{n\cdot\pi}\left[\cos\left(n\cdot 2\cdot\pi\cdot\frac{t_a}{T}\right) - \cos\left(n\cdot 2\cdot\pi\cdot\frac{t_e}{T}\right)\right] = A\cdot b_n'\left(n;\frac{t_a}{T};\frac{t_e}{T}\right)$$

$$b_n'\left(n;\frac{t_a}{T};\frac{t_e}{T}\right) = \frac{1}{n\cdot\pi}\left[\cos\left(n\cdot 2\cdot\pi\cdot\frac{t_a}{T}\right) - \cos\left(n\cdot 2\cdot\pi\cdot\frac{t_e}{T}\right)\right]$$

### Gleichung 15: Abkürzung für die b_n

Aus 1. folgt:

$$\frac{1}{2}U_{bat}\cdot m = b_{1,ges}$$

$$\frac{1}{2}U_{bat}\cdot m = -\frac{U_{bat}}{2}\cdot b_n'\left(1;0;\frac{t_1}{T}\right) + \frac{U_{bat}}{2}\cdot b_n'\left(1;\frac{t_1}{T};\frac{t_2}{T}\right) - \frac{U_{bat}}{2}\cdot b_n'\left(1;\frac{t_2}{T};\frac{t_3}{T}\right) + \frac{U_{bat}}{2}\cdot b_n'\left(1;\frac{t_3}{T};0,5-\frac{t_3}{T}\right) -$$

$$\frac{U_{bat}}{2}\cdot b_n'\left(1;0,5-\frac{t_3}{T};0,5-\frac{t_2}{T}\right) + \frac{U_{bat}}{2}\cdot b_n'\left(1;0,5-\frac{t_2}{T};0,5-\frac{t_1}{T}\right) - \frac{U_{bat}}{2}\cdot b_n'\left(1;0,5-\frac{t_1}{T};0,5\right) +$$

$$\frac{U_{bat}}{2}\cdot b_n'\left(1;0,5;0,5+\frac{t_1}{T}\right) - \frac{U_{bat}}{2}\cdot b_n'\left(1;0,5+\frac{t_1}{T};0,5+\frac{t_2}{T}\right) + \frac{U_{bat}}{2}\cdot b_n'\left(1;0,5+\frac{t_2}{T};0,5+\frac{t_3}{T}\right) -$$

$$\frac{U_{bat}}{2}\cdot b_n'\left(1;0,5+\frac{t_3}{T};1-\frac{t_3}{T}\right) + \frac{U_{bat}}{2}\cdot b_n'\left(1;1-\frac{t_3}{T};1-\frac{t_2}{T}\right) - \frac{U_{bat}}{2}\cdot b_n'\left(1;1-\frac{t_2}{T};1-\frac{t_1}{T}\right) + \frac{U_{bat}}{2}\cdot b_n'\left(1;1-\frac{t_1}{T};1\right)$$

$$m = -b_n'\left(1;0;\frac{t_1}{T}\right) + b_n'\left(1;\frac{t_1}{T};\frac{t_2}{T}\right) - b_n'\left(1;\frac{t_2}{T};\frac{t_3}{T}\right) + b_n'\left(1;\frac{t_3}{T};0,5-\frac{t_3}{T}\right) -$$

$$b_n'\left(1;0,5-\frac{t_3}{T};0,5-\frac{t_2}{T}\right) + b_n'\left(1;0,5-\frac{t_2}{T};0,5-\frac{t_1}{T}\right) - b_n'\left(1;0,5-\frac{t_1}{T};0,5\right) +$$

$$b_n'\left(1;0,5;0,5+\frac{t_1}{T}\right) - b_n'\left(1;0,5+\frac{t_1}{T};0,5+\frac{t_2}{T}\right) + b_n'\left(1;0,5+\frac{t_2}{T};0,5+\frac{t_3}{T}\right) -$$

$$b_n'\left(1;0,5+\frac{t_3}{T};1-\frac{t_3}{T}\right) + b_n'\left(1;1-\frac{t_3}{T};1-\frac{t_2}{T}\right) - b_n'\left(1;1-\frac{t_2}{T};1-\frac{t_1}{T}\right) + b_n'\left(1;1-\frac{t_1}{T};1\right)$$

### Gleichung 16: Randbedingung 1

Aus 2. folgt:

$$b_{3,ges} = 0$$

$$0 = -b'_n\left(3;0;\frac{t_1}{T}\right) + b'_n\left(3;\frac{t_1}{T};\frac{t_2}{T}\right) - b'_n\left(3;\frac{t_2}{T};\frac{t_3}{T}\right) + b'_n\left(3;\frac{t_3}{T};0,5-\frac{t_3}{T}\right) -$$

$$b'_n\left(3;0,5-\frac{t_3}{T};0,5-\frac{t_2}{T}\right) + b'_n\left(3;0,5-\frac{t_2}{T};0,5-\frac{t_1}{T}\right) - b'_n\left(3;0,5-\frac{t_1}{T};0,5\right) +$$

$$b'_n\left(3;0,5;0,5+\frac{t_1}{T}\right) - b'_n\left(3;0,5+\frac{t_1}{T};0,5+\frac{t_2}{T}\right) + b'_n\left(3;0,5+\frac{t_2}{T};0,5+\frac{t_3}{T}\right) -$$

$$b'_n\left(3;0,5+\frac{t_3}{T};1-\frac{t_3}{T}\right) + b'_n\left(3;1-\frac{t_3}{T};1-\frac{t_2}{T}\right) - b'_n\left(3;1-\frac{t_2}{T};1-\frac{t_1}{T}\right) + b'_n\left(3;1-\frac{t_1}{T};1\right)$$

## Gleichung 17: Randbedingung 2, 3. Harmonische Null

Aus 3. folgt:

$$b_{5,ges} = 0$$

$$0 = -b'_n\left(5;0;\frac{t_1}{T}\right) + b'_n\left(5;\frac{t_1}{T};\frac{t_2}{T}\right) - b'_n\left(5;\frac{t_2}{T};\frac{t_3}{T}\right) + b'_n\left(5;\frac{t_3}{T};0,5-\frac{t_3}{T}\right) -$$

$$b'_n\left(5;0,5-\frac{t_3}{T};0,5-\frac{t_2}{T}\right) + b'_n\left(5;0,5-\frac{t_2}{T};0,5-\frac{t_1}{T}\right) - b'_n\left(5;0,5-\frac{t_1}{T};0,5\right) +$$

$$b'_n\left(5;0,5;0,5+\frac{t_1}{T}\right) - b'_n\left(5;0,5+\frac{t_1}{T};0,5+\frac{t_2}{T}\right) + b'_n\left(5;0,5+\frac{t_2}{T};0,5+\frac{t_3}{T}\right) -$$

$$b'_n\left(5;0,5+\frac{t_3}{T};1-\frac{t_3}{T}\right) + b'_n\left(5;1-\frac{t_3}{T};1-\frac{t_2}{T}\right) - b'_n\left(5;1-\frac{t_2}{T};1-\frac{t_1}{T}\right) + b'_n\left(5;1-\frac{t_1}{T};1\right)$$

## Gleichung 18: Randbedingung 3, 5. Harmonische Null

Die Ermittlung der freien Parameter $t_1$, $t_2$ und $t_3$ in Abhängigkeit von m erfolgt auf die gleiche Weise wie im Falle der Vollbrücke. Die Daten wurden wiederum sortiert und auf ein äquidistantes Raster des Modulationsgrades m umgerechnet. Das Ergebnis kann beispielsweise als Matlab-"mat"-Datenfile vorliegen.

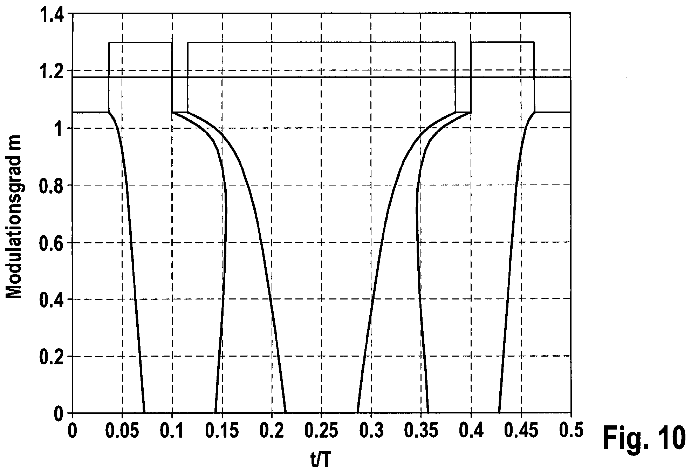

Fig. 10 zeigt einen Verlauf der Flanken über den Modulationsgrad m bei der Halbbrücke.

Ein weiterer Nachteil ist die erhöhte Schaltfrequenz der Transistoren. Bei der Vollbrücke können sich die beiden Halbbrücken abwechseln und dadurch eine erhöhte Frequenz am Transformator bereitstellen. Bei der Halbbrücke mit kapazitivem Teiler muss eine Halbbrücke alle Schaltvorgänge durchführen.

Das vorgestellte Verfahren zur Berechnung der optimierten Spannungspulse lässt sich beliebig erweitern. Eine mögliche Erweiterung ist die Ausdehnung des Prinzips auf höhere Pulszahlen. Die Vorgehensweise für die Berechnung der Pulse bzw. der Einstellparameter ist immer gleich:

1. Ermittlung der möglichen Schaltzustände der zu betrachtenden Endstufe
2. Aufstellen von Pulsen mit entsprechenden Freiheitsgraden (Anzahl = Taktzahl) unter Einhaltung der Symmetriebedingungen (Punktsymmetrisch zu T/2 und zwischen 0 und T/2 spiegelsymmetrisch zu T/4)
3. Formulierung der Randbedingung für den Modulationsgrad
4. Aufstellen einer Gleichung für den Fourier-Koeffizienten der ungeraden Harmonischen bis n=2*($z_T$-1)+1
5. Numerische Berechnung: Berechnen der Fourier-Koeffizienten für alle möglichen Variationen der Parameter ($t_x$/T) und Aussortieren der geeigneten Lösungen durch Vergleich der Fourier-Koeffizienten mit zulässigen Schwellwerten

6. Sortieren der Daten und Entfernen unzulässiger bzw. unsteter Lösungen

7. Umrechnen der Parameter auf eine festes Raster von m und Ablage als Tabelle

**Patentansprüche**

1. Verfahren zum Ansteuern eines Wechselrichters eines Elektrowerkzeuges zur Abgabe einer Wechselspannung an ein Ultraschallsystem des Elektrowerkzeuges, wobei abhängig vom Strom und/oder der Spannung der Wechselspannung eine Istgröße ermittelt wird, wobei die Istgröße mit einer Sollgröße verglichen wird und eine Steuergröße zur Ansteuerung des Wechselrichters ermittelt wird, wobei abhängig von der Steuergröße ein Steuersignal für die Ansteuerung des Wechselrichters in der Weise erzeugt wird, dass der Wechselrichter wenigstens zwei Spannungspulse während einer halben Periode der zu erzeugenden Wechselspannung abgibt, wobei mithilfe einer digitalen Verarbeitungsschaltung aus Messwerten der Versorgungsspannung des Wechselrichters ein Phasenwinkel zwischen Strom und Spannung ermittelt wird, wobei von der digitalen Verarbeitungsschaltung (10) ein Iststrom und der Phasenwinkel an eine digitale Regelung (11) weiter geleitet wird, wobei die digitale Regelung (11) aus einem Vergleich mit einem Sollwert für den Phasenwinkel eine Stellgröße für eine Taktfrequenz ermittelt und die Stellgröße für die Taktfrequenz an den Pulssignalgenerator weiter gegeben wird, wobei aus einem Sollwert für den Strom und dem Istwert für den Strom ein Modulationsgrad ermittelt wird und der Modulationsgrad an den Pulssignalgenerator (3) weitergegeben wird, wobei der Pulssignalgenerator abhängig von der Stellgröße für die Taktfrequenz die eigene Taktfrequenz anpasst, und wobei der Pulssignalgenerator abhängig vom Modulationsgrad Zeitpunkte und Zeitdauern der wenigstens zwei Steuerpulse festlegt.

2. Verfahren nach Anspruch 1, wobei das Steuersignal so gewählt ist, dass der Wechselrichter eine ungerade Anzahl von Spannungspulsen pro Halbperiode ausgibt, wobei die Anzahl größer 1 ist.

3. Verfahren nach einem der Ansprüche 1 oder 2, wobei die Anzahl der Spannungspulse abhängig von weiteren Parametern angepasst wird.

4. Verfahren nach Anspruch 3, wobei die Anzahl der Spannungspulse pro Halbperiode mit einer vom Wechselrichter abzugebenden Leistung abnimmt.

5. Verfahren nach einem der Ansprüche 1 bis 4, wobei die Istgröße als analoger Wert erfasst wird, wobei der analoge Wert einer digitalen Messwertkorrektur unterzogen wird, wobei die Steuergröße aufgrund des korrigierten digitalen Messwertes ermittelt wird.

6. Verfahren nach Anspruch 5, wobei aus dem korrigierten digitalen Messwert ein Istwert für den Strom und eine Phasenverschiebung zwischen Strom und Spannung ermittelt wird und bei der Ermittlung der Steuergröße berücksichtigt wird.

7. Verfahren nach Anspruch 6, wobei aus dem digitalen Istwert für den Strom und die Phase im Vergleich zu digitalen Sollwerten für den Strom und die Phase wenigstens ein digitaler Korrekturwert ermittelt wird, wobei der digitale Korrekturwert für die Ermittlung der Steuergröße verwendet wird.

8. Verfahren nach Anspruch 7, wobei als Korrekturwert ein Modulationsgrad für einen digitalen Pulssignalgenerator ermittelt wird, wobei der Pulssignalgenerator aufgrund des Modulationsgrades als Steuergröße ein Steuersignal ermittelt und an den Wechselrichter abgibt.

9. Verfahren nach einem der Ansprüche 1 bis 8, wobei bei der digitalen Messwertkorrektur und/oder bei einer digitalen Signalverarbeitung und/oder bei der Generierung des Steuersignals eine Stabilisierung des Phasenwinkels zwischen Strom und Spannung in Richtung auf einen Phasennulldurchgang durchgeführt wird.

10. Verfahren nach einem der Ansprüche 1 bis 9, wobei das Steuersignal so gewählt wird, dass die Spannungspulse des Wechselrichters während einer Halbperiode der abzugebenden Wechselspannung unterschiedlich lang sind und symmetrisch in Bezug auf die Halbperiode angeordnet sind.

11. Elektrowerkzeug mit einer Leistungselektronik zur Versorgung eines Ultraschallsystems (7) des Elektrowerkzeuges, mit einem Wechselrichter (2) zum Erzeugen einer Versorgungsspannung für das Ultraschallsystem (7) und einem digitalen Pulssignalgenerator (3), wobei der Pulssignalgenerator ausgebildet ist, um ein Steuersignal zur Ansteuerung des Wechselrichters (2) bereit zu stellen, wobei der Pulssignalgenerator (2) ausgebildet ist, um den Wechselrichter (2) in der Weise anzusteuern, dass der Wechselrichter (2) wenigstens zwei Spannungspulse während einer halben Periode der gewünschten Wechselspannung ausgibt, wobei eine digitale Verarbeitungsschaltung (10) vorgesehen ist, dahingehend konfiguriert dass aus Messwerten der Versorgungsspannung des Wechselrichters (2) einen Istwert für einen Phasenwinkel zwischen Strom und Spannung ermittelt wird, wobei die digitale Verarbeitungsschaltung (10) konfiguriert ist einen Iststrom und den Phasenwinkel für eine Bewegungsadmittanz des Ultraschallsystems an eine digitale Regelung (11) weiterzuleiten, wobei die digitale Regelung (11) konfiguriert ist aus einem Vergleich mit einem Sollwert für den Phasenwinkel eine Stellgröße für eine Taktfrequenz zu ermitteln und die Stellgröße für die Taktfrequenz an den Pulssignalgenerator weiter zu geben, wobei die digitale Regelung (11) konfiguriert ist aus einem Sollwert für den Strom und dem Istwert für den Strom einen Modulationsgrad zu ermitteln und den Modulationsgrad an den Pulssignalgenerator (3) weiter zu geben, wobei der Pulssignalgenerator (3) konfiguriert ist abhängig von der Stellgröße für die Taktfrequenz die eigene Taktfrequenz anzupassen, und wobei der Pulssignalgenerator konfiguriert ist abhängig vom Modulationsgrad Zeitpunkte und Zeitdauern der wenigstens zwei Steuerpulse festzulegen.

**12.** Elektrowerkzeug nach Anspruch 11, wobei eine analoge Messschaltung (6, 8) vorgesehen ist, wobei die analoge Messschaltung ausgebildet ist, um einen Messwert, insbesondere eine Spannung und/oder einen Strom der Versorgungsspannung des Wechselrichters (2) zu erfassen und an eine digitale Regelung (11) weiter zu geben, wobei die digitale Regelung (11) abhängig von einem Sollwert und dem Messwert einen Steuerwert ermittelt und den Steuerwert an den Pulssignalgenerator (3) weiter gibt, wobei der Pulssignalgenerator, den Steuerwert bei der Bildung des Steuersignals berücksichtigt.

**13.** Elektrowerkzeug nach Anspruch 12, wobei eine digitale Korrekturschaltung (9) vorgesehen ist, die mit der analogen Messschaltung (8) verbunden ist, wobei die digitale Korrekturschaltung (9) ausgebildet ist, um analoge Messwerte zu digitalisieren und zu korrigieren, insbesondere um einen Offset der Messspannungen und/oder eine Messwertverstärkung und/oder einen frequenzabhängigen Verstärkungsfaktor eines Tiefpassfilters zu korrigieren.

**14.** Elektrowerkzeug nach den Ansprüchen 11 bis 13, wobei die Korrekturschaltung (9) einen A/D-Wandler aufweist, wobei der A/D-Wandler mit einer veränderlichen Taktfrequenz betreibbar ist, wobei die Stellgröße für die Taktfrequenz an den A/D-Wandler geleitet wird und die Taktfrequenz des A/D-Wandlers abhängig von der Stellgröße angepasst wird.

**15.** Elektrowerkzeug nach einem der Ansprüche 11 bis 14, wobei die digitale Verarbeitungsschaltung (10) mit einer veränderlichen Taktfrequenz betreibbar ist, wobei die digitale Regelung (11) die Stellgröße für die Taktfrequenz der Verarbeitungsschaltung (10) zuführt, und wobei die Taktfrequenz der Verarbeitungsschaltung (10) abhängig von der Stellgröße der Taktfrequenz angepasst wird.

**16.** Elektrowerkzeug nach einem der Ansprüche 11 bis 15, wobei der Pulssignalgenerator (3) abhängig von einem Sollstrom die Anzahl der während einer halben Periode der Wechselspannung abzugebenden Spannungspulse festlegt, wobei vorzugsweise mit steigendem Strom die Anzahl der Spannungspulse während einer halben Periode abnimmt.

## Claims

**1.** Method for actuating an inverter of an electric power tool in order to output an AC voltage to an ultrasound system of the electric power tool, wherein an actual variable is identified depending on the current and/or the voltage of the AC voltage, wherein the actual variable is compared with a setpoint variable and a control variable for actuating the inverter is identified, wherein a control signal for the actuation of the inverter is generated depending on the control variable in such a way that the inverter outputs at least two voltage pulses during a half-period of the AC voltage to be generated, wherein a phase angle between the current and the voltage is identified from measurement values of the supply voltage of the inverter with the aid of a digital processing circuit, wherein an actual current and the phase angle are transmitted from the digital processing circuit (10) to a digital controller (11), wherein the digital controller (11) identifies a manipulated variable for a clock frequency from a comparison with a setpoint value for the phase angle and the manipulated variable for the clock frequency is transmitted to the pulse signal generator, wherein a modulation degree is identified from a setpoint value for the current and the actual value for the current and the modulation degree is transmitted to the pulse signal generator (3), wherein the pulse signal generator adjusts the inherent clock frequency depending on the manipulated variable for the clock frequency, and wherein the pulse signal generator determines times and durations of the at least two control pulses depending on the modulation degree.

2. Method according to Claim 1, wherein the control signal is selected such that the inverter outputs an uneven number of voltage pulses per half-period, wherein the number is greater than 1.

3. Method according to either of Claims 1 and 2, wherein the number of voltage pulses is adjusted depending on further parameters.

4. Method according to Claim 3, wherein the number of voltage pulses per half-period decreases with a power to be output by the inverter.

5. Method according to one of Claims 1 to 4, wherein the actual variable is detected as an analogue value, wherein the analogue value is subjected to digital measurement value correction, wherein the control variable is identified based on the corrected digital measurement value.

6. Method according to Claim 5, wherein an actual value for the current and a phase shift between the current and voltage is identified from the corrected digital measurement value and is taken into account in the identification of the control variable.

7. Method according to Claim 6, wherein at least one digital correction value is identified from the digital actual value for the current and the phase in comparison to digital setpoint values for the current and the phase, wherein the digital correction value is used for the identification of the control variable.

8. Method according to Claim 7, wherein a modulation degree for a digital pulse signal generator is identified as the correction value, wherein the pulse signal generator identifies a control signal based on the modulation degree as the control variable and outputs same to the inverter.

9. Method according to one of Claims 1 to 8, wherein the phase angle between the current and voltage is stabilized in the direction of a phase zero crossing during the digital measurement value correction and/or during digital signal processing and/or during the generation of the control signal.

10. Method according to one of Claims 1 to 9, wherein the control signal is selected such that the voltage pulses of the inverter during a half-period of the AC voltage to be output are of different lengths and are arranged symmetrically in relation to the half-period.

11. Electric power tool having a power electronics system for supplying power to an ultrasound system (7) of the electric power tool, having an inverter (2) for generating a supply voltage for the ultrasound system (7) and a digital pulse signal generator (3), wherein the pulse signal generator is designed to provide a control signal for actuating the inverter (2), wherein the pulse signal generator (2) is designed to actuate the inverter (2) in such a way that the inverter (2) outputs at least two voltage pulses during a half-period of the desired AC voltage, wherein a digital processing circuit (10) is provided and configured to the extent that an actual value for a phase angle between the current and the voltage is identified from measurement values of the supply voltage of the inverter (2), wherein the digital processing circuit (10) is configured to transmit an actual current and the phase angle for a motional admittance of the ultrasound system to a digital controller (11), wherein the digital controller (11) is configured to identify a manipulated variable for a clock frequency from a comparison with a setpoint value for the phase angle and to transmit the manipulated variable for the clock frequency to the pulse signal generator, wherein the digital controller (11) is configured to identify a modulation degree from a setpoint value for the current and the actual value for the current and to transmit the modulation degree to the pulse signal generator (3), wherein the pulse signal generator (3) is configured to adjust the inherent clock frequency depending on the manipulated variable for the clock frequency, and wherein the pulse signal generator is configured to determine times and durations of the at least two control pulses depending on the modulation degree.

12. Electric power tool according to Claim 11, wherein an analogue measurement circuit (6, 8) is provided, wherein the analogue measurement circuit is designed to detect a measurement value, in particular a voltage and/or a current of the supply voltage of the inverter (2) and to transmit same to a digital controller (11), wherein the digital controller (11) identifies a control value depending on a setpoint value and the measurement value and transmits the control value to the pulse signal generator (3), wherein the pulse signal generator takes the control value into account during the formation of the control signal.

13. Electric power tool according to Claim 12, wherein a digital correction circuit (9) is provided, which is connected to the analogue measurement circuit (8), wherein the digital correction circuit (9) is designed to digitize and to correct analogue measurement values, in particular to correct an offset of the measurement voltages and/or a measurement value amplification and/or a frequency-dependent amplification factor of a low-pass filter.

14. Electric power tool according to Claims 11 to 13, wherein the correction circuit (9) has an A/D converter, wherein the A/D converter is able to be operated at a variable clock frequency, wherein the manipulated variable for the clock frequency is transmitted to the A/D converter and the clock frequency of the A/D converter is adjusted depending on the manipulated variable.

15. Electric power tool according to one of Claims 11 to 14, wherein the digital processing circuit (10) is able to be operated at a variable clock frequency, wherein the digital controller (11) feeds the manipulated variable for the clock frequency to the processing circuit (10), and wherein the clock frequency of the processing circuit (10) is adjusted depending on the manipulated variable of the clock frequency.

16. Electric power tool according to one of Claims 11 to 15, wherein the pulse signal generator (3) determines the number of voltage pulses to be output during a half-period of the AC voltage depending on a setpoint current, wherein the number of voltage pulses during a half-period preferably decreases as the current increases.


**Revendications**

1. Procédé de commande d'un onduleur d'un outil électrique, destiné à délivrer une tension alternative à un système à ultrasons de l'outil électrique, dans lequel une grandeur réelle est déterminée en fonction du courant et/ou de la tension du courant alternatif, dans lequel la grandeur réelle est comparée à une grandeur de consigne et une grandeur de commande est déterminée pour commander l'onduleur, dans laquelle, en fonction de la grandeur de commande, un signal de commande est généré pour la commande de l'onduleur, de manière à ce que l'onduleur fournisse au moins deux impulsions de tension pendant une demi-période de la tension alternative à générer, dans lequel un angle de phase entre le courant et la tension est déterminé au moyen d'un circuit de traitement numérique à partir de valeurs de mesure de la tension d'alimentation de l'onduleur, dans lequel un courant réel et l'angle de phase sont transmis par le circuit de traitement numérique (10) à une unité de commande numérique (11), dans lequel l'unité de commande numérique (11) détermine, à partir d'une comparaison avec une valeur de consigne de l'angle de phase, une grandeur de réglage d'une fréquence d'horloge et la grandeur de réglage de la fréquence d'horloge est transférée au générateur de signal impulsionnel, dans lequel un degré de modulation est déterminé à partir d'une valeur de consigne du courant et de la valeur réelle du courant et le degré de modulation est transmis au générateur de signal impulsionnel (3), dans lequel le générateur de signal impulsionnel adapte sa propre fréquence d'horloge en fonction de la grandeur de réglage de la fréquence d'horloge, et dans lequel le générateur de signal impulsionnel établit des instants et des durées desdites au moins deux impulsions de commande en fonction du degré de modulation.

2. Procédé selon la revendication 1, dans lequel le signal de commande est sélectionné de manière à ce que l'onduleur délivre un nombre impair d'impulsions de tension par demi-période, ledit nombre étant supérieur à 1.

3. Procédé selon l'une des revendications 1 ou 2, dans lequel le nombre d'impulsions de tension est ajusté en fonction d'autres paramètres.

4. Procédé selon la revendication 3, dans lequel le nombre d'impulsions de tension par demi-période diminue avec une puissance devant être délivrée par l'onduleur.

5. Procédé selon l'une des revendications 1 à 4, dans lequel la grandeur réelle est détectée sous la forme d'une valeur analogique, dans lequel la valeur analogique est soumise à une correction numérique de la valeur de mesure, dans lequel la grandeur de commande est déterminée sur la base de la valeur de mesure numérique corrigée.

6. Procédé selon la revendication 5, dans lequel une valeur réelle du courant et un déphasage entre le courant et la tension sont déterminés à partir de la valeur de mesure numérique corrigée et sont pris en compte dans la détermination de la grandeur de réglage.

7. Procédé selon la revendication 6, dans lequel au moins une valeur de correction numérique est déterminée à partir de la valeur réelle numérique du courant et de la phase par comparaison à des valeurs de consigne numériques du courant et de la phase, dans lequel la valeur de correction numérique est utilisée pour déterminer la grandeur de commande.

8. Procédé selon la revendication 7, dans lequel un degré de modulation d'un générateur numérique de signal impulsionnel est déterminé en tant que valeur de correction, dans lequel le générateur de signal impulsionnel détermine un signal de commande en tant que grandeur de commande sur la base du degré de modulation et le délivre à l'onduleur.

9. Procédé selon l'une des revendications 1 à 8, dans lequel, lors de la correction numérique des valeurs de mesure et/ou lors du traitement numérique du signal et/ou lors de la génération du signal de commande, une stabilisation de l'angle de phase entre le courant et la tension est exécutée dans le sens d'un passage à zéro des phases.

10. Procédé selon l'une des revendications 1 à 9, dans lequel le signal de commande est sélectionné de manière à ce que les impulsions de tension de l'onduleur soient de longueurs différentes pendant une demi-période de la tension alternative à délivrer et soient disposées de manière symétrique par rapport à la demi-période.

11. Outil électrique comprenant une électronique de puissance pour l'alimentation d'un système à ultrasons (7) de l'outil électrique, un onduleur (2) pour générer une tension d'alimentation destinée au système à ultrasons (7) et un générateur de signal impulsionnel (3) numérique, dans lequel le générateur de signal impulsionnel est conçu pour fournir un signal de commande destiné à commander l'onduleur (2), dans lequel le générateur de signal impulsionnel (2) est conçu pour commander l'onduleur (2) de manière à ce que l'onduleur (2) délivre au moins deux impulsions de tension pendant une demi-période de la tension alternative souhaitée, dans lequel il est prévu un circuit de traitement numérique (10), configuré de manière à ce qu'une valeur réelle d'un angle de phase entre le courant et la tension soit déterminée à partir de valeurs de mesure de la tension d'alimentation de l'onduleur (2), dans lequel le circuit de traitement numérique (10) est configuré pour transmettre un courant réel et l'angle de phase d'une admittance de mouvement du système à ultrasons à une unité de commande numérique (11), dans lequel l'unité de commande numérique (11) est configurée pour déterminer une grandeur de réglage d'une fréquence d'horloge à partir d'une comparaison avec une valeur de consigne de l'angle de phase et pour transmettre la grandeur de réglage de la fréquence d'horloge au générateur de signal impulsionnel, dans lequel l'unité de commande numérique (11) est configurée pour déterminer un degré de modulation à partir d'une valeur de consigne du courant et de la valeur réelle du courant et pour transmettre le degré de modulation au générateur de signal impulsionnel (3), dans lequel le générateur de signal impulsionnel (3) est configuré pour adapter sa propre fréquence d'horloge en fonction de la grandeur de réglage de la fréquence d'horloge, et dans lequel le générateur de signal impulsionnel est configuré pour établir des instants et des durées desdites au moins deux impulsions de commande en fonction du degré de modulation.

12. Outil électrique selon la revendication 11, dans lequel il est prévu un circuit de mesure analogique (6, 8), dans lequel le circuit de mesure analogique est conçu pour détecter une valeur de mesure, en particulier une tension et/ou un courant, de la tension d'alimentation de l'onduleur (2) et pour la transmettre à une unité de commande numérique (11), dans lequel l'unité de commande numérique (11) détermine une valeur de commande en fonction d'une valeur de consigne et de la valeur de mesure et transmet la valeur de commande au générateur de signal impulsionnel (3), dans lequel le générateur de signal impulsionnel prend en compte la valeur de commande dans la génération du signal de commande.

13. Outil électrique selon la revendication 12, dans lequel il est prévu un circuit de correction numérique (9) qui est relié au circuit de mesure analogique (8), dans lequel le circuit de correction numérique (9) est conçu pour numériser et corriger des valeurs de mesure analogiques, en particulier pour corriger un décalage des tensions de mesure et/ou une amplification des valeurs de mesure et/ou un facteur d'amplification dépendant de la fréquence d'un filtre passe-bas.

14. Outil électrique selon les revendications 11 à 13, dans lequel le circuit de correction (9) comprend un convertisseur A/N, dans lequel le convertisseur A/N peut fonctionner avec une fréquence d'horloge variable, dans lequel la grandeur de réglage de la fréquence d'horloge est envoyée au convertisseur A/N et la fréquence d'horloge du convertisseur A/N est ajustée en fonction de la grandeur de réglage.

**15.** Outil électrique selon l'une des revendications 11 à 14, dans lequel le circuit de traitement numérique (10) peut fonctionner avec une fréquence d'horloge variable, dans lequel l'unité de commande numérique (11) délivre la grandeur de réglage de la fréquence d'horloge au circuit de traitement (10), et dans lequel la fréquence d'horloge du circuit de traitement (10) est adaptée à la fréquence d'horloge en fonction de la grandeur de réglage.

**16.** Outil électrique selon l'une des revendications 11 à 15, dans lequel le générateur de signal impulsionnel (3) détermine le nombre d'impulsions de tension à délivrer pendant une demi-période de la tension alternative en fonction d'un courant de consigne, dans lequel le nombre d'impulsions de tension diminue pendant une demi-période, de préférence lorsque le courant croît.

Fig. 1

EP 2 727 236 B1

**Fig. 2**

Pufferkondensator  MOSFET Endstufe

$I_{Bat}$

$U_{Bat}$

$T_1$  $T_3$

$T_2$  $T_4$

$I_{Prim}$

$U_{Prim}$

Passiver LC-Tiefpass und Transformator

Piezo-Oszillator

$I_P$

$U_P$

Halbbrücke 1  Halbbrücke 2

Vollbrücke (H-Brücke)

Fig. 3

MOSFET Endstufe

Piezo-Oszillator

$U_P$

$I_P$

Passiver LC-Tiefpass und Transformator

$I_{Prim}$

$U_{Prim}$

$C_1$

$C_2$

$T_1$

$T_2$

Halbbrücke   Kapazitiver Teiler

$I_{Bat}$

$U_{Bat}$

+   −

Fig. 4

Fig. 5

Fig. 6

Fig. 7

Fig. 8

Fig. 9

Fig. 10

t/T

Modulationsgrad m

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1707144 A1
- US 4339791 A